(19) Europäisches Patentamt
European Patent Office
Office européen des brevets

(11) Veröffentlichungsnummer: **0 254 858 B1**

# (12) EUROPÄISCHE PATENTSCHRIFT

(45) Veröffentlichungstag der Patentschrift: **31.10.90**

(51) Int. Cl.[5]: **C09B 11/10**, B41M 5/136, B41M 5/155, B41M 5/20

(21) Anmeldenummer: **87108744.1**

(22) Anmeldetag: **19.06.87**

(54) **Chromogene 3,1.Benzoxazine.**

(30) Priorität: **02.07.86 DE 3622262**

(43) Veröffentlichungstag der Anmeldung: **03.02.88 Patentblatt 88/5**

(45) Bekanntmachung des Hinweises auf die Patenterteilung: **31.10.90 Patentblatt 90/44**

(84) Benannte Vertragsstaaten: **CH DE FR GB LI**

(56) Entgegenhaltungen:
**EP-A- 0 179 378**
**EP-A- 0 180 813**
**EP-A- 0 187 329**
**US-A- 4 074 050**

**CHEMICAL ABSTRACTS, Band 70, 1969, Seite 341, Zusammenfassung Nr. 47472r, Columbus, Ohio, US; SA-A-67 06 887 (FARBWERKE HOECHST A.-G.) 10-04-1968**

(73) Patentinhaber: **BAYER AG, D-5090 Leverkusen 1 Bayerwerk(DE)**

(72) Erfinder: **Berneth, Horst, Dr., Erfurter Strasse 1, D-5090 Leverkusen(DE)**
Erfinder: **Jabs, Gert, Dr., Wingensiefer Kamp 25, D-5068 Odenthal(DE)**

**EP 0 254 858 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind chromogene 3,1-Benzoxazine der Formel

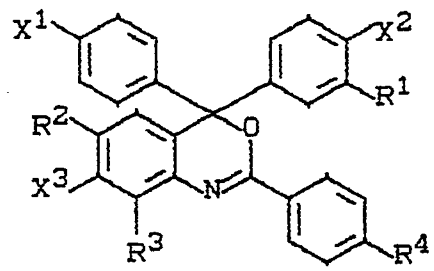

(I),

worin
$X^1$ Wasserstoff, $C_1$-$C_4$-Alkyl, Chlor oder $OY^1$,
$X^2$ $NY^2Y^3$,
$X^3$ $OY^4$ oder $NY^5Y^6$,
$R^1$ - $R^3$ unabhängig voneinander Wasserstoff, $C_1$-$C_4$-Alkyl, Chlor, $C_1$-$C_4$-Alkoxy, $C_1$-$C_4$-Mono- oder -Dialkylamino,
oder $R^1$ zusammen mit $Y^2$,
$R^2$ oder $R^3$ zusammen mit $Y^4$ oder $Y^5$ oder
$R^2$ und $R^3$ gleichzeitig mit $Y^5$ und $Y^6$ eine 2- bis 4-gliedrige Brücke, die ein Sauerstoffatom oder ein Stickstoffatom enthalten und bis zu 4 Methylgruppen tragen kann,
bedeuten, wobei
$R^1$ und $R^3$ nur dann gleichzeitig für Wasserstoff stehen, wenn $R^2$ mit $Y^4$ oder $Y^5$ eine der obengenannten Brücken bildet,
$R^4$ Wasserstoff, Methyl oder Chlor,
$Y^1$ und $Y^4$ unabhängig voneinander $C_1$-$C_4$-Alkyl, Cyclohexyl oder Benzyl und
$Y^2$, $Y^3$, $Y^5$ und $Y^6$ unabhängig voneinander Wasserstoff, $C^1$-$C^4$-Alkyl, Cyclohexyl oder Benzyl
bedeuten, ihre Herstellung und ihre Verwendung für druckkopierfähige, thermoreaktive oder elektrochrome Aufzeichnungsmaterialien.

In der älteren, nicht vorveröffentlichten EP-A 0 187 329 sind ebenfalls chromogene 3,1-Benzoxazine beschrieben worden, die sich jedoch hinsichtlich des Substituentenmusters von den erfindungsgemäßen Verbindungen (1) unterscheiden.

Beispiele für bevorzugte Brückenglieder werden bei Formel (II) unter $X^5$ und $X^6$ angegeben.

Bevorzugt sind chromogene 3,1-Benzoxazine der Formel

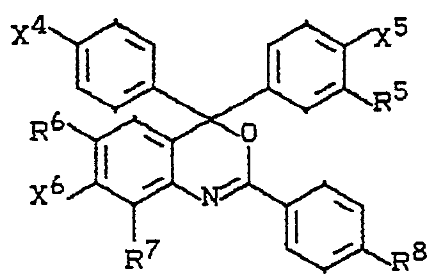

(II),

worin
$X^4$ Wasserstoff, Methyl, Ethyl, Chlor, Methoxy oder Ethoxy,
$X^5$ Dimethylamino, Diethylamino oder zusammen mit $R^5$ eine Gruppierung der Formeln

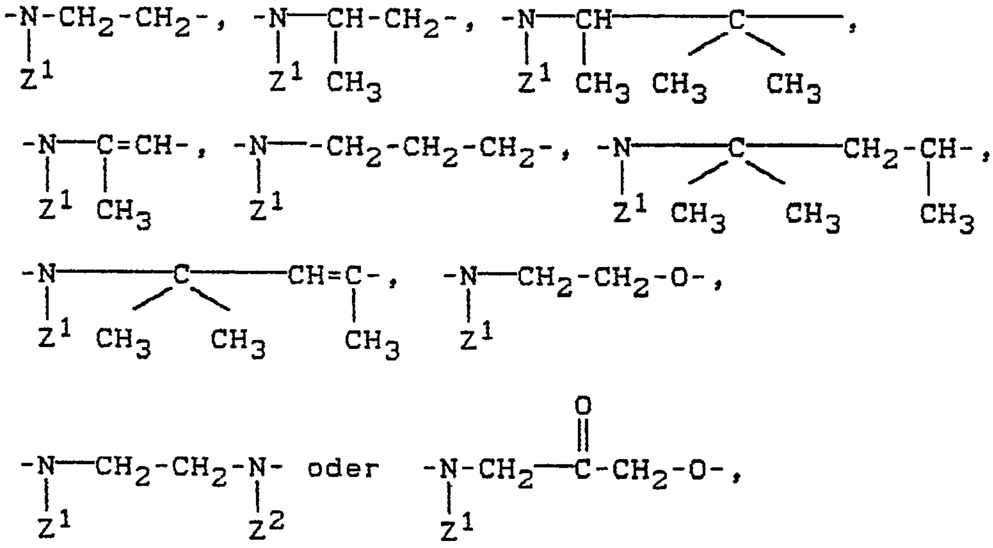

oder

$X^6$ Methoxy, Ethoxy, Dimethylamino, Diethylamino oder zusammen mit $R^7$ eine Gruppierung der Formeln -O-$CH_2$-$CH_2$-, -O-$CH_2$-O- oder -O-$CH_2$-$CH_2$O- oder eine der bei $X^5$/$R^5$ angegebenen Gruppierungen,
$R^5$ und $R^6$ unabhängig voneinander Wasserstoff, Methyl, Ethyl, Chlor, Methoxy, Ethoxy, Methylamino, Ethylamino oder Dimethylamino,
$R^7$ Methyl, Ethyl, Chlor, Methoxy, Ethoxy, Methylamino, Ethylamino oder Dimethylamino,
$R^8$ Wasserstoff, Methyl oder Chlor und
$Z^1$ und $Z^2$ unabhängig voneinander Wasserstoff, Methyl oder Ethyl bedeuten,

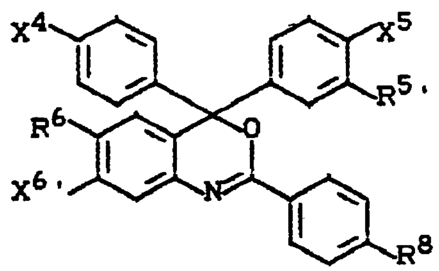

(III)

worin
$X^4$, $X^5$, $R^6$ und $R^8$ die bei Formel (II) angegebene Bedeutung haben,
$X^{6'}$ Methoxy, Ethoxy, Dimethylamino oder Diethylamino und
$R^5$ Methyl, Ethyl, Chlor, Methoxy, Ethoxy, Methylamino, Ethylamino oder Dimethylamino bedeuten, und

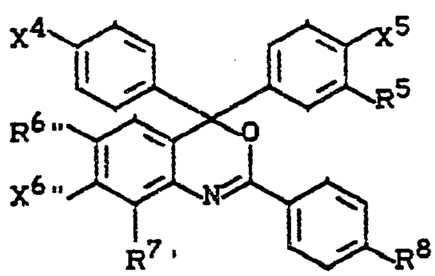

(IV)

worin $X^4$, $X^5$, $R^5$ und $R^8$ die bei Formel (II) angegebene Bedeutung haben,
$X^{6''}$ mit $R^{6''}$ eine Gruppierung der Formeln -O-$CH_2$-$CH_2$-, -O-$CH_2$-O- oder -O-$CH_2$-$CH_2$-O- oder eine der bei $X^5$/$R^5$ angegebenen Gruppierungen oder
$X^{6''}$ mit $R^{6''}$ und $R^{7'}$ eine Gruppierung der Formeln

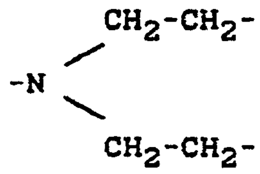 , 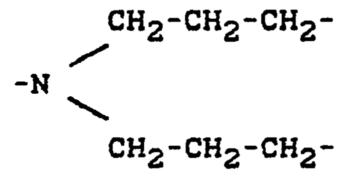 oder

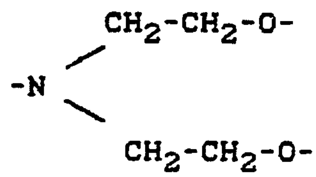

oder

R7' Wasserstoff, Methyl, Ethyl, Chlor, Methoxy, Ethoxy, Methylamino, Ethylamino oder Dimethylamino bedeuten.

Wenn in den Formeln (II)-(IV) die Substituenten $X^5$, $X^6$, $X^{6'}$ und $X^{6''}$ ringgeschlossen sind, stehen die Stickstoff- bzw. Sauerstoffatome der obengenannten Brückenglieder an der in den Formeln bezeichneten Verknüpfungsstellen von $X^5$, $X^6$, $X^{6'}$ und $X^{6''}$.

Besonders bevorzugte 3,1-Benzoxazine besitzen die Formel

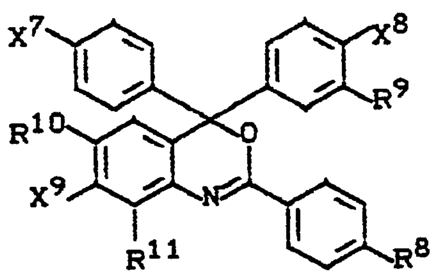

(V)

worin

$R^8$ die bei Formel (II) angegebene Bedeutung hat,

$X^7$ Wasserstoff, Methyl, Chlor, Methoxy oder Ethoxy,

$X^8$ Dimethylamino oder Diethylamino,

$X^9$ Methoxy, Ethoxy, Dimethylamino oder Diethylamino,

$R^9$, $R^{10}$, $R^{11}$ Wasserstoff, Methyl, Chlor, Methoxy oder Ethoxy, wobei $R^9$ und $R^{11}$ nicht gleichzeitig Wasserstoff sind,

bedeuten.

Gegenstand der Erfindung sind auch Mischungen von 3,1-Benzoxazinen der Formeln

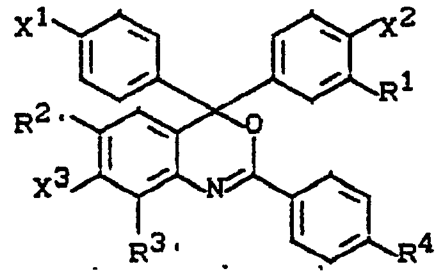

(VI)

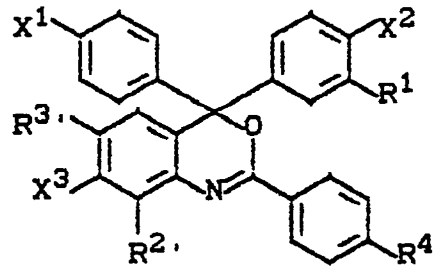

(VII)

worin

$X^1$ Wasserstoff, $C_1$-$C_4$-Alkyl, Chlor oder $OY^1$,

$X^2$ $NY^2Y^3$,

$X^3$ $OY^4$ oder $NY^5Y^6$,

$R^1$ und $R^3$, unabhängig voneinander Wasserstoff, $C_1$-$C_4$-Alkyl, Chlor, $C_1$-$C_4$-Alkoxy, $C_1$-$C_4$-Mono- oder -Dialkylamino,

$R^{2'}$ $C_1$-$C_4$-Alkyl, Chlor, $C_1$-$C_4$-Alkoxy, $C_1$-$C_4$-Mono- oder -Dialkylamino,

oder

$R^1$ zusammen mit $Y^2$,

$R^2$, bzw. $R^{3'}$ zusammen mit $Y^4$ oder $Y^5$ eine 2- bis 4-gliedrige Brücke, die ein Sauerstoff- oder Stickstoffatom enthalten und bis zu 4 Methylgruppen tragen kann,

$Y^1$ und $Y^4$ unabhängig voneinander $C_1$-$C_4$-Alkyl, Cyclohexyl oder Benzyl und

$Y^2$, $Y^3$, $Y^5$ und $Y^6$ unabhängig voneinander Wasserstoff, $C_1$-$C_4$-Alkyl, Cyclohexyl oder Benzyl

bedeuten,

wobei $R^{2'}$ und $R^{3'}$ verschieden voneinander sind und die genannten Brückenglieder bevorzugt die bei Formel (II) angegebene Bedeutung haben,

sowie Mischungen von 3,1-Benzoxazinen (I), insbesondere (II)-(V), und (VI)/(VII) mit 3,1-Benzoxazinen der Formel

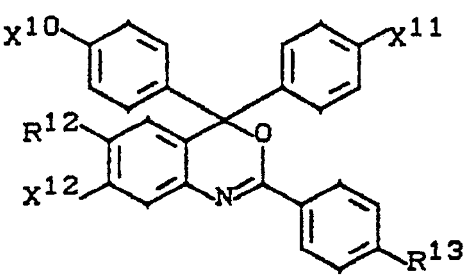

(VIII)

worin

$X^{10}$ Wasserstoff, $C_1$-$C_4$-Alkyl, Chlor oder $OY^7$,

$X^{11}$ $NY^8Y^9$,

$X^{12}$ $OY^{10}$ oder $NY^{11}Y^{12}$,

$R^{12}$ Wasserstoff, $C_1$-$C_4$-Alkyl, Chlor, $C_1$-$C_4$-Alkoxy, $C_1$-$C_4$-Mono- oder -Dialkylamino,

$R^{13}$ Wasserstoff, Methyl oder Chlor,

$Y^7$ und $Y^{10}$ unabhängig voneinander $C_1$-$C_4$-Alkyl, Cyclohexyl oder Benzyl und

$Y^8$, $Y^9$, $Y^{11}$ und $Y^{12}$ unabhängig voneinander Wasserstoff, $C_1$-$C_4$-Alkyl, Cyclohexyl oder Benzyl

bedeuten.

Ein weiterer Gegenstand der Erfindung sind Leukoverbindungen der Formel

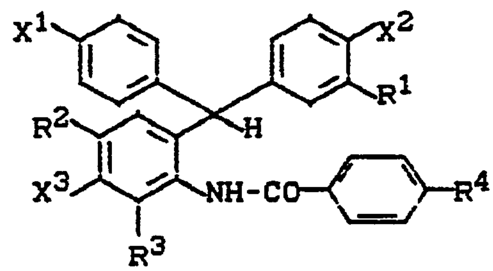

(IX)

worin
die Substituenten die in Formel (I) angegebene Bedeutung haben.

Gegenstand der Erfindung sind ebenfalls Verfahren zur Herstellung der 3,1-Benzoxazine der Formel (I) durch Umsetzung von Amiden der Formel

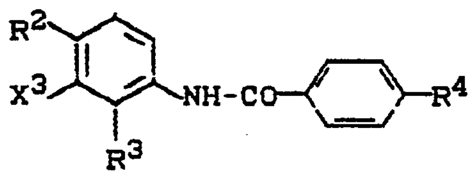

(X)

mit Ketonen der Formel

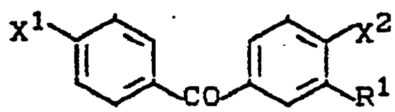

(XI)

oder von Verbindungen der Formel

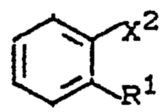

(XII)

mit Ketonen der Formel

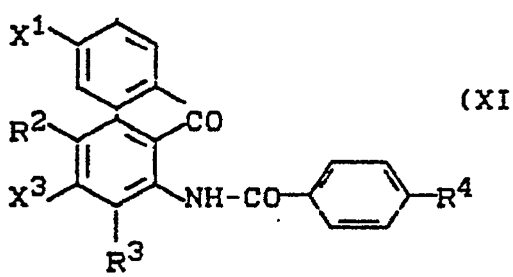

(XIII)

worin $X^1$-$X^3$ und $R^1$-$R^4$ die bei Formel (I) genannte Bedeutung besitzen.

Die Umsetzung erfolgt ohne oder auch mit unter diesen Bedingungen inerten Lösungsmitteln bei Temperaturen zwischen 0°C und dem Siedepunkt des jeweiligen Mediums. Anschließend wird auf beispielsweise Wasser oder einen Alkohol ausgetragen.

Durch Anheben des pH-Wertes mit beispielsweise Alkali-oder Erdalkalihydroxident, Carbonaten, Hydrogencarbonaten, Ammoniak oder Aminen bis zum Verschwinden der Farbe dieser Mischung erhält man D – evtl. nach Entfernen der inerten Lösungsmittel – die 3,1-Benzoxazine der Formel (I). Hierbei kann es notwendig sein, zur Wasserabspaltung aus evtl. gebildeten Carbinolbasen einige Zeit zu erwärmen oder das primär erhaltene unsaubere Produkt in Lösungsmitteln, wie Alkoholen - beispielsweise Methanol, Ethanol, 2-Propanol, Butanol; Nitrilen - beispielsweise Acetonitril; Ketonen - beispielsweise Aceton, 2-Butanon; Kohlenwasserstoffen - beispielsweise Toluol, Xylol; chlorierten Kohlenwasserstoffen - beispielsweise Chlorbenzol, Dichlorbenzol, Chloroform, 1,2-Dichlorethan oder Estern - beispielsweise

Essigsäureethylester, Essigsäurebutylester, einige Zeit bei Temperaturen zwischen Raumtempertur und der Siedetemperatur des jeweiligen Mediums zu behandeln.

Wasserabspaltende Reagenzien sind beispielsweise Phosphoroxychlorid, Phosphorpentachlorid, Diphosphorpentoxid, Triphenylphosphordichlorid, Phosgen, Phosphortrichlorid, Phosphortribromid, Sulfurylchlorid, Thionylchlorid, Oxalylchlorid oder Mischungen hiervon. Vorzugsweise werden Phosphoroxychlorid, Phosphoroxychlorid/Diphosphorpentoxid, Phosgen oder Oxalylchlorid eingesetzt.

In manchen Fällen ist es vorteilhaft, Basen wie Pyridin, Chinolin, Diazabicyclooctan, 1-Methylimidazol, Diazabicyclononen bzw. - undecen oder Lewissäuren wie Borfluorid, Borchlorid, Aluminiumchlorid, Zinkchlorid oder Zinn(IV)chlorid zuzusetzen.

Geeignete inerte Lösungsmittel sind beispielsweise Toluol, Chlorbenzol, Dichlorbenzol, Nitrobenzol, chlorierte aliphatische Kohlenwasserstoffe, wie 1,2-Dichlor-ethan.

Ein weiterer Gegenstand der Erfindung ist ein Verfahren zur Herstellung chromogener 3,1-Benzoxazine der Formel I, dadurch gekennzeichnet, daß man eine Leukoverbindung der Formel (IX) oxidiert.

Diese Oxidation kann auf bekannte Weise mit höherwertigen Metallverbindungen, wie $PbO_2$, $MnO_2$, Permangananten, $CrO_3$, Chromaten, Dichromaten, $NiO_2$, $K_3[Fe(CN)_6]$, mit Chinonen, wie p-Benzochinon, Chloranil, Tetrachlor-o-chinon, Dichlordicyano-chinon, oder auf eine andere literaturbekannte Weise, wie z.B. mit Sauerstoff, Luft, Perboraten oder Wasserstoffperoxid, erfolgen.

Die Aufarbeitung, Isolierung und evtl. Nachbehandlung erfolgt auf analoge Weise wie oben beschrieben.

Die Oxidation mit höherwertigen Metallverbindungen erfolgt üblicherweise in saurem Medium oder in organischen Lösungsmitteln, wie Alkoholen - z.B. Ethanol, Isopropanol, Ethylenglykolmonomethylether; Ketone - z.B. Aceton, Butanon oder Methylisopropylketon oder polaren aprotischen Lösungsmitteln, z.B. N-Methylpyrrolidon, γ-Butyrolacton, Acetonitril, Dimethylsulfoxid oder Sulfolan oder in Mischungen solcher Lösungsmittel mit Säuren bei Temperaturen zwischen 0°C und 60°C, vorzugsweise 10-40°C.

Geeignete Säuren sind beispielsweise Salzsäure, Schwefelsäure, Phosphorsäure, Essigsäure, Propionsäure oder Mischungen untereinander und/oder Mischungen mit Wasser. Eine bevorzugte Mischung ist Salzsäure, Essigsäure und Wasser.

Die Oxidation mit Chinonen erfolgt üblicherweise in organischen Lösungsmitteln, wie Alkoholen - z.B. Methanol, Ethanol, Isopropanol; Ketonen - z.B. Aceton, Butanon; Estern z.B. Essigsäureethyl- oder -butylester; Carbonsäuren - z.B. Essigsäure, Propionsäure; Aromaten - z.B. Toluol, Chlorbenzol, Dichlorbenzol oder polaren aprotischen Lösungsmitteln, wie N-Methylpyrrolidon, Dimethylformamid, γ-Butyrolacton, Acetonitril, Sulfolan oder aber in Mischungen hiervon bei Temperaturen zwischen 0°C und dem Siedepunkt des Mediums, vorzugsweise 20-70°C.

Mischungen von chromogenen 3,1-Benzoxazinen der Formeln (VI) und (VII), die einen besonders bevorzugten Gegenstand der Erfindung darstellen, können entweder durch Mischen der entsprechenden 3,1-Benzoxazine oder besonders vorteilhaft direkt bei der Synthese, z.B. durch Umsetzung einer entsprechenden Mischung von Amiden der Formel (X) mit Ketonen der formel (XI) hergestellt werden.

Die 3,1-Benzoxazine der Formel (I) und ihre Mischungen sind normalerweise farblos oder höchstens schwach gefärbt.

Ein weiterer Gegenstand der Erfindung ist die Verwendung der chromogenen 3,1-Benzoxazine der Formel (I) oder Mischungen hiervon für druckkopierfähige, thermoreaktive oder elektrochrome Aufzeichnungsmaterialien, dadurch gekennzeichnet, daß das Aufzeichnungsmaterial einen sauren Farbentwickler enthält.

Als saure Entwickler sind insbesonder Tone, saure Oxide und saure Salze sowie monomere oder polymere Phenole oder Carbonsäuren zu nennen.

Wenn die Farbbildner mit dem sauren Entwickler in Kontakt gebracht werden, ergeben sich intensive grünblaue, grüne, schwarze, violette oder rote Farbtöne, die ausgezeichnet sublimations- und lichtecht sind. Durch Mischungen untereinander lassen sich marineblaue, graue oder schwarze Färbungen erzielen.

Sie sind auch wertvoll im Gemisch mit einem oder mehreren anderen bekannten Farbbildnern, z.B. 3,3-Bis(aminophenyl)-phthaliden, 3,3-Bis(indolyl)-phthaliden, 3-Amino-fluoranen, Spirodipyranen, Chromenoindolen, Phenoxazinen, Phenothiazinen, Carbazolylmethanen, 4,4-Diaryldihydrochinazolonen, oder anderen Triarylmethanleukofarbstoffen, um grüne, violette, blaue, marineblaue, graue oder schwarze Färbungen zu ergeben.

Die 3,1-Benzoxazine der Formel (I) zeigen sowohl auf phenolischen Unterlagen wie auch besonders auf aktivierten Tonen eine gute Farbintensität. Sie eignen sich vor allem als Farbbildner für die Verwendung in einem wärmeempfindlichen oder druckempfindlichen Aufzeichnungsmaterial, das sowohl Kopierals auch Registriermaterial sein kann. Ihre Entwicklungsgeschwindigkeit ist von den Substituenten nahezu unabhängig. Im allgemeinen zeichnen sie sich durch eine hohe Entwicklungsgeschwindigkeit aus bei gleichzeitig reduzierter Empfindlichkeit der Aufzeichnungsmaterialien gegenüber unbeabsichtigter vorzeitiger Entwicklung.

Dadurch sind sie untereinander nahezu beliebig kombinierbar. Ihr Entwicklungsfarbton wird sofort erreicht, ohne daß unerwünschte Nuancenveränderunen während oder in Anschluß an die Entwicklung auftreten.

Die 3,1-Benzoxazine der Formel (I) zeichnen sich durch gute Lichtechtheit und Klimaalterungsstabilität sowohl im entwickelten als auch unentwickelten Zustand aus. Ihre Lichtechtheit im unentwickelten Zustand ist gegenüber solchen 3,1-Benzoxazinen, bei denen $R^1 = R^2 = R^3$ = Wasserstoff ist, verbessert.

Ein druckempfindliches Material besteht beispielsweise aus mindestens 1 Paar von Blättern, die mindestens einen Farbbildner der Formel (I), gelöst oder dispergiert in einem nichtflüchtigen organischen Lösungsmittel, und einen sauren Entwickler enthalten.

Solche Verfahren und Zubereitungen sind beispielsweise aus den US-Patentschriften 2 800 457, 2 800 458, 2 948 753, 3 096 189 und 3 193 404 und aus den deutschen Offenlegungsschriften 2 555 080 und 2 700 937 bekannt.

Um eine frühzeitige Aktivierung der in dem druckempfindlichen Aufzeichnungsmaterial vorhandenen Farbbildner zu verhindern, werden diese vorzugsweise in Mikrokapseln eingeschlossen, die sich in der Regel durch Druck zerbrechen lassen.

Als Kapselwandmaterialien eignen sich z.B. Gelatine/Gummi arabicum, Polyamide, Polyurethane, Polysulfonamide, Polyester, Polycarbonate, Polysulfonate, Polyacrylate und Phenol-, Melamin- oder Harnstoff-Formaldehyd-Kondensate, wie sie beispielsweise in M. Gutcho, Capsule Technology and Microencapsulation, Noyes Data Corporation 1972, G. Baxter, Microencapsulation, Processes and Applications, Herausgeber J.E. Vandegaar und den deutschen Offenlegungsschriften 2 237 545 und 2 119 933 beschrieben sind.

Bevorzugt werden beim erfindungsgemäßen Verfahren Mikrokapseln verwendet, deren Hüllen aus Polyadditionsprodukten aus Poly-Isocyanaten und Polyaminen bestehen.

Zur Herstellung derartiger Mikrokapseln einzusetzende Isocyanate sind Diisocyanate, Polyisocyanate, Diisocyanate mit Biuretstruktur, durch di- oder trifunktionelle Alkohole modifizierte Polyisocyanate oder andere modifizierte Isocyanate, z.B. solche der Formel

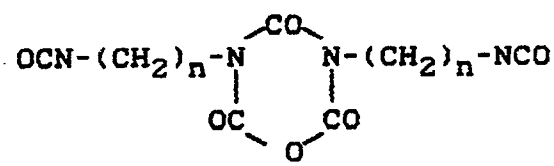

(XIV)

n = 3-6.

Zur Umsetzung mit den genannten Isocyanaten geeignete Diamine sind aliphatische primäre oder sekundäre Di- und Polyamine.

Isocyanate, Amine, Lösungsmittel und ein geeignetes Herstellungsverfahren für solche Mikrokapseln sind beispielsweise in DE-OS 32 03 059 beschrieben.

Ebenfalls bevorzugt werden beim erfindungsgemäßen Verfahren Mikrokapseln verwendet, deren Hüllen aus Polyamiden oder Melamin-Formaldehyd-Kondensaten oder Gelatine/Gummi arabicum bestehen.

Thermoreaktive Aufzeichnungssysteme umfassen z.B. wärmeempfindliche Aufzeichnungs- und Kopiermaterialien und -papiere.

Ein solches Material ist beispielsweise in der deutschen Offenlegungsschrift 2 555 080 beschrieben.

Als Entwickler eignen sich die gleichen Elektronenakzeptoren wie sie in druckempfindlichen Papieren verwendet werden, vorzugsweise phenolische Ver bindungen, die beispielsweise in der DE-PS 1 251 348 beschrieben sind, sowie Borsäure und organische, vorzugsweise aliphatische Dicarbonsäuren.

Ein weiteres geeignetes thermoreaktives Entwicklungssystem ist in DE-OS 3 337 296 beschrieben, bei dem sauer modifizierte Polymerisate vorzugsweise des Acrylnitrils als Entwickler wirken.

Die Leukoverbindungen der Formel (IX) können beispielsweise als langsam entwickelnden Farbbildner in übliche druck- oder thermoreaktive Papiere eingearbeitet werden. Dort dienen sie wegen ihrer guten Lichtechtheit als Mischkomponenten für schnell entwickelnde aber wenig lichtechte Farbbildner, z.B. Kristallviolettlacton. So wird die Lichtechtheit der Aufzeichnung verbessert.

Außerdem sind die Leukoverbindungen der Formel (IX) geeignet für oxidativ-entwickelnde druck- oder thermoreaktive Aufzeichnungsmaterialien. Hier wird dem Farbbildner oder dem Entwickler ein geeignetes Oxidationsmittel zugesetzt. Ein solches Verfahren ist beispielsweise in DE-OS 3 390 001 beschrieben.

Die 3,1-Benzoxazine der Formel (I) bzw. die hieraus durch Ringöffnung gebildeten Farbstoffe sind zum Anfärben von Polyacrylnitril, tannierter Baumwolle und anderen sauer modifizierten Fasern, Geweben und Pulvern geeignet.

<u>Beispiel 1</u>

76,6 Phosphoroxichlorid, 23,9 g 4-(Dimethylamino)-3-methylbenzophenon, 24,0 g 3-Benzoylamino-N,N-dimethylanilin und 42,4 g Phosphorpentoxid werden 48 h bei 40°C verrührt. Die Schmelze wird auf 200 ml Toluol und 500 ml Eiswasser ausgetragen. Der pH wird auf 6-7 gestellt und die Wasserphase wird

abgetrennt. Die Toluolphase wird mit 150 ml 3 % Salzsäure extrahiert. Die abgetrennte Salzsäurephase wird alkalisch gestellt und das Produkt wird in 200 ml Toluol aufgenommen. Die Toluolphase wird wasserfrei destilliert. Schließlich wird das Toluol abdestilliert und der Rückstand mit 50 ml Ethanol zur Kristallisation gebracht. Absaugen und Trocknen liefert 10,7 g (23 % der Theorie) hellgelbes Pulver mit dem Schmelzpunkt 148-150°C und der Formel

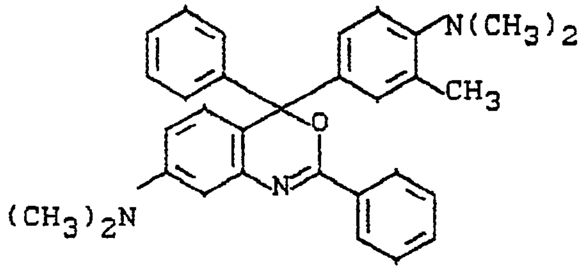

IR (KBr): 1603 $cm^{-1}$
$\lambda_{max}$ (Eisessig): 450, 652 nm
Farbe auf Säureton: grün
Farbe auf Salicylat: grün

Beispiel 2

Analog läßt sich die Verbindung der Formel

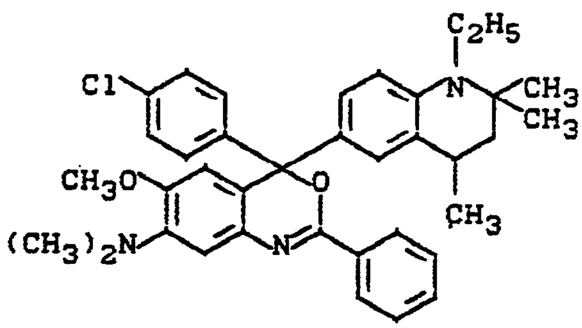

herstellen.

$\lambda_{max}$ (Eisessig): 466, 684 nm Farbe auf Säureton: stumpfes gelbstichiges grün.

Analog lassen sich die Beispiele 3-7 herstellen.

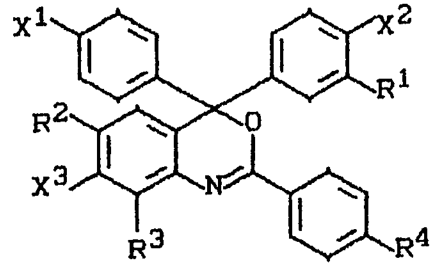

| Beispiel | $X^1$ | $X^2$ | $R^1$ | $X^3$ | $R^2$ | $R^3$ | $R^4$ | Farbton auf Säureton |
|---|---|---|---|---|---|---|---|---|
| 3 | $OCH_3$ | $N(CH_3)_2$ | $CH_3$ | $N(CH_3)_2$ | H | H | H | blaustichig grün |
| 4 | H | $N(CH_3)_2$ | $OCH_3$ | $N(C_2H_5)_2$ | H | H | $CH_3$ | stumpf grün |
| 5 | $CH(CH_3)_2$ | $-\underset{CH_3}{\underset{\mid}{N}}-CH_2-CH_2-$ | | $-\underset{CH_3}{\underset{\mid}{N}}-CH_2-CH_2-$ | | H | H | grün |
| 6 | $OCH_3$ | $N(CH_3)_2$ | $CH_3$ | $OCH_3$ | $CH_3$ | H | Cl | schwarz |
| 7 | H | $N(CH_3)_2$ | $CH_3$ | $N(CH_3)_2$ | H | $CH_3$ | H | stumpf grün |

Beispiel 8

59,8 g Phosphoroxichlorid, 22,0 g 4-Methoxi-4'-diethylamino-benzophenon, 18,5 g 3-Benzoylamino-2-methyl-N,N-dimethylanilin und 33,3 g Phosphorpentoxid werden 48 h bei 50°C gerührt. Dann wird ausgetragen auf 400 ml Wasser und 150 ml Toluol bei 20-25°C. Der pH wird auf 8 gestellt und die Wasserphase abgetrennt. Die Toluolphase wird mit 400 ml Wasser gewaschen, wasserfrei destilliert und schließlich eindestiliert.

Der Rückstand wird in 70 ml Ethanol warm gelöst, mit 0,5 ml 10 %iger Natronlauge versetzt und kalt gerührt. Das Produkt wird abgesaugt und mit Ethanol und Wasser gewaschen: 7,6 g (19 % der Theorie) beiges Kristallisat mit dem Schmelzpunkt 163-166°C und der Formel

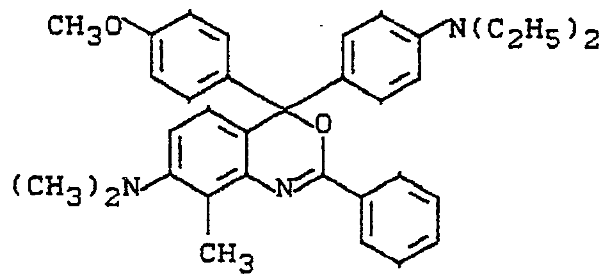

IR (KBr): 1611 $cm^{-1}$
$\lambda_{max}$ (Eisessig): 486, 598 nm
Farbe auf Säureton: blaustichig schwarz
Farbe auf Bisphenol A: blaustichig schwarz

Biespiel 9

Analog läßt sich in 85 % Ausbeute die Verbindung der Formel

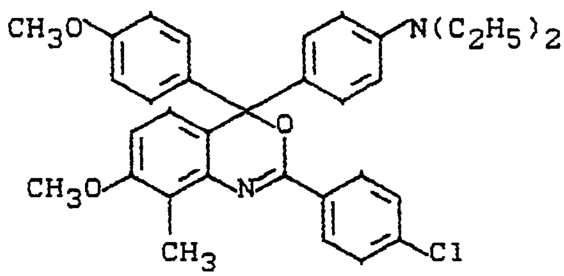

herstellen.
IR (KBr): 1610 $cm^{-1}$
Schmelzpunkt: 177-178°C
$\lambda_{max}$ (Eisessig): 430, 540 nm
Farbe auf Säureton: bordeaux

Analog lassen sich die Beispiele 10-17 herstellen.

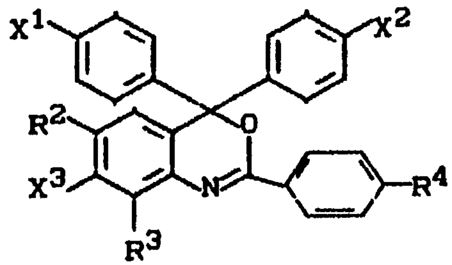

| Beispiel | $X^1$ | $X^2$ | $X^3$ | $R^2$ | $R^3$ | $R^4$ | Farbton auf Säureton |
|---|---|---|---|---|---|---|---|
| 10 | H | $N(CH_3)_2$ | $NHCH_3$ | $CH_3$ | $CH_3$ | H | grün |
| 11 | $CH_3$ | $N(C_2H_5)_2$ | $N(CH_3)_2$ | H | Cl | $CH_3$ | stumpf grün |
| 12 | $n-C_4H_9$ | $N(CH_3)_2$ | $N(CH_2C_6H_5)_2$ | H | $OCH_3$ | Cl | stumpf grün |
| 13 | H | $N(C_2H_5)_2$ | $OCH_3$ | $OCH_3$ | Cl | H | bordeaux |
| 14 | H | $N(C_4H_9)_2$ | $N(C_2H_5)_2$ | $CH_3$ | Cl | Cl | stumpf grün |
| 15 | $OCH_3$ | $N(CH_3)_2$ | $NHC_2H_5$ | Cl | Cl | H | schmutzig grün |
| 16 | H | $N(C_2H_5)_2$ | $N(CH_3)_2$ | H | $CH_3$ | H | stumpf grün |
| 17 | Cl | $N(C_2H_5)_2$ | $N(CH_3)_2$ | H | $CH_3$ | H | stumpf grün |

Beispiel 18

76,6 g Phosphoroxichlorid, 25,3 g 4-Diethylaminobenzophenol, 35,6 g 1-Ethyl-2,2,4-trimethyl-7-(4-chlorbenzoylamino)-1,2,3,4-tetrahydrochinolin und 42,4 g Phosphorpentoxid werden 44 h bei 40-60°C gerührt. Die Schmelze wird in 25 ml Acetonitril aufgenommen und auf 200 ml Toluol und 500 ml Eiswasser ausgetragen. Es wird auf pH = 9 gestellt, bei 50°C das Wasser abgetrennt und erneut bei 50°C mit 500 ml Wasser gewaschen. Das Toluol wird abdestilliert und der Rückstand in 100 ml Ethanol warm gelöst. Nach dem Abkühlen wird abgesaugt, mit Ethanol und Wasser gewaschen und getrocknet.

44,6 g (75 % der Theorie) blaß grüngelbes Kristallpulver mit dem Schmelzpunkt 205-207° C und der Formel

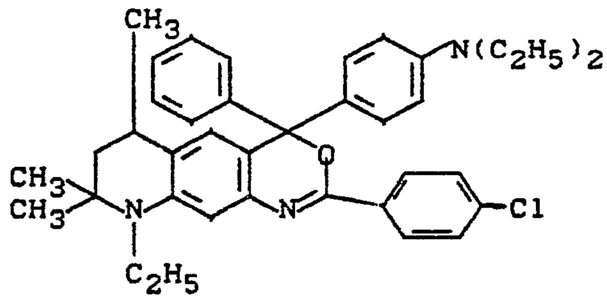

IR (KBr): 1603 $cm^{-1}$
$\lambda_{max}$ (Eisessig): 449, 666 nm
Farbe auf Säureton: leuchtend grün
Farbe auf Phenolharz: gelbstichig grün
Farbe mit Bisphenol A: gelbstichig grün

Beispiel 19

Analog läßt sich in 63 % Ausbeute die Verbindung der Formel

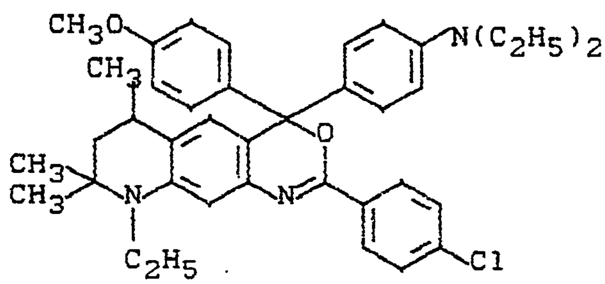

herstellen.

Schmelzpunkt: 97-100° C
$\lambda_{max}$ (Eisessig): 488, 652 nm
Farbe auf Säureton: stumpfes grün
Farbe auf Salicylat: oliv

Analog lassen sich die Beispiele 20-29 herstellen.

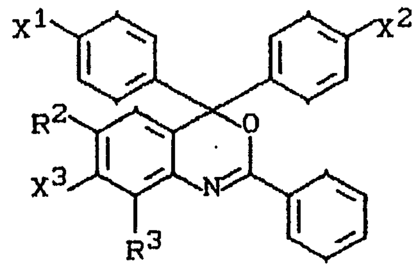

| Beispiel | $X^1$ | $X^2$ | $R^2$ | $X^3$ | $R^3$ | Farbton auf Säureton |
|---|---|---|---|---|---|---|
| 20 | $C_2H_5$ | $N(CH_3)_2$ | $-CH_2CH_2CH_2-N(CH_3)-$ | | H | gelbstichig grün |
| 21 | $OCH_3$ | $N(CH_3)_2$ | $-C(CH_3)=CH-C(CH_3)_2-N(CH_3)-$ | | H | grün |
| 22 | Cl | $N(CH_2C_6H_5)(CH_3)$ | $-O-CH_2CH_2-N(C_2H_5)-$ | | H | gelbstichig grün |

| Beispiel | $X^1$ | $X^2$ | $R^2$ | $X^3$ | $R^3$ | Farbton auf Säureton |
|---|---|---|---|---|---|---|
| 23 | $OC_2H_5$ | $N(CH_3)_2$ | 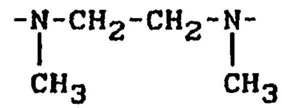 | | $CH_3$ | grün |
| 24 | H | $N(CH_3)_2$ | 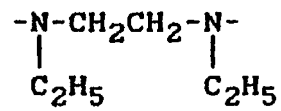 | | H | grün |
| 25 | Cl | $N(C_2H_5)_2$ | 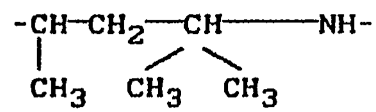 | | H | gelbstichig grün |
| 26 | H | $N(CH_3)_2$ | 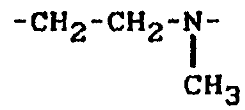 | | H | gelbstichig grün |
| 27 | Cl | $N(n-C_3H_7)_2$ | 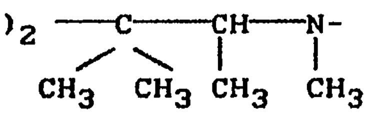 | | H | gelbstichig grün |
| 28 | $OCH_3$ | $N(CH_3)_2$ | 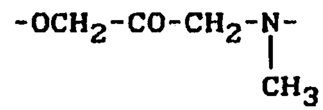 | | H | grün |
| 29 | Cl | 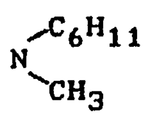 | 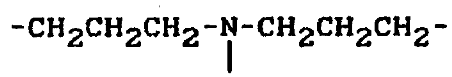 | | | leuchtend gelbstichig grün |

Beispiel 30

28,9 g 4-Chlor-4'-diethylaminobenzhydrol, 25,4 g einer 85:15 Mischung aus 5-Benzoylamino-2-methyl-N,N-dimethylanilin und 3-Benzoylamino-2-methyl-N,N-dimethylanilin werden in 100 ml Toluol unter $N_2$-Atmosphäre bei 60°C mit 11,2 g Acetanhydrid versetzt und 4 h refluxiert. Diese Lösung wird auf 80°C abgekühlt, mit 25,8 g Chloranilin versetzt und 15 min refluxiert. Es wird auf 100 ml mit Toluol verdünnt und auf eine Mischung aus 500 ml Wasser und 30 ml konzentrierte Natronlauge ausgetragen. Nach 2 h bei 50°C wird ein Niederschlag abfiltriert. Die Toluolphase wird abgetrennt und eingedampft. Der Rückstand wird in 300 ml Ethanol unter Zusatz von 10 ml 10 %iger Natronlauge kristallisiert. Es wird abgesaugt, mit Ethanol gewaschen und getrocknet: 32,5 g (62 % der Theorie) beiges Kristallpulver mit dem Schmelzpunkt 163-165°C und der Formel

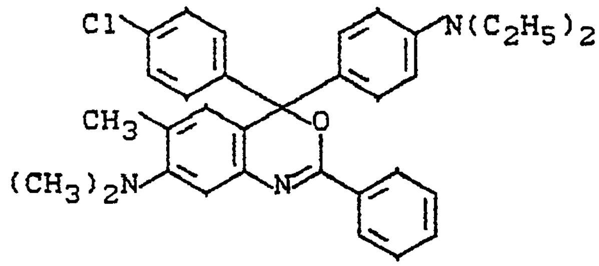

+

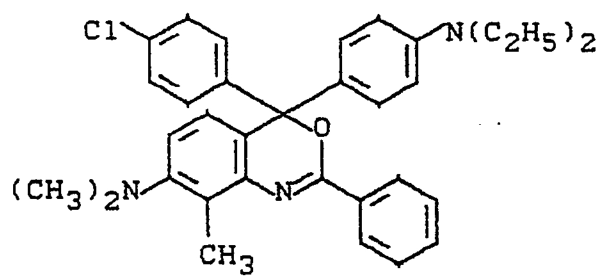

Mischungsverhältnis: 95:5
$\lambda_{max}$ (Eisessig): 451, 630 nm
Farbe auf Säureton: stumpf grün
Farbe auf Phenolharz: stumpf grün
Farbe auf Salicylat: stumpf grün

Beispiel 31

Zu einer Suspension von 78,3 g 4-Methoxy-4'-diethylaminobenzophenon in 70 ml wasserfreiem 1,2-Dichlorbenzol tropfen bei 20° C während 1 h 15,2 g Oxalylchlorid. Zu der entstandenen roten Lösung tropft während 1/2 h bei 30-40° C eine warme Lösung aus 25,4 g einer 85:15 Mischung von 5-Benzoylamino-2-methyl-N,N-dimethylanilin und 3-Benzoylamino-2-methyl-N,N-dimethylanilin und 7,9 g Pyridin in 100 ml wasserfreiem 1,2-Dichlorbenzol. Nach 4 h bei 40° C wird auf 150 ml Wasser ausgetragen und mit Salzsäure pH = 0,6-0,7 eingestellt.

Die Dichlorbenzolphase wird abgetrennt. Die Wasserphase wird mit 150 ml Toluol versetzt, auf pH = 5 gestellt und 1/2 h gekocht. Die Toluolphase wird abgetrennt, wasserfrei destilliert und schließlich eingedampft. Der Rückstand wird in 100 ml 2-Propanol unter Zusatz von 3 ml 10 %iger Natronlauge gelöst, kurz auf 70° C erwärmt und kalt gerührt. Es wird abgesaugt, mit 2-Propanol und Wasser gewaschen und getrocknet. 35,5 g (68 % der Theorie) beiges Kristallpulver mit dem Schmelzpunkt 160-162° C und der Formel

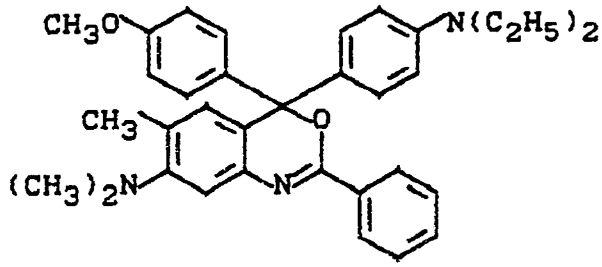

+

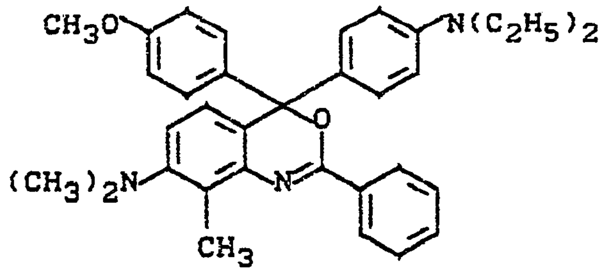

Mischungsverhältnis: 90:10
$\lambda_{max}$ (Eisessig): 492, 584 nm
Farbe auf Säureton: schwarz
Farbe auf Phenolharz: schwarz
Farbe auf Salicylat: schwarz

Beispiel 32

Analog Beispiel 30 oder 31 oder in der Verfahrensweise analog Beispiel 8 läßt sich in 40 % Ausbeute eine Mischung der Verbindungen der Formeln

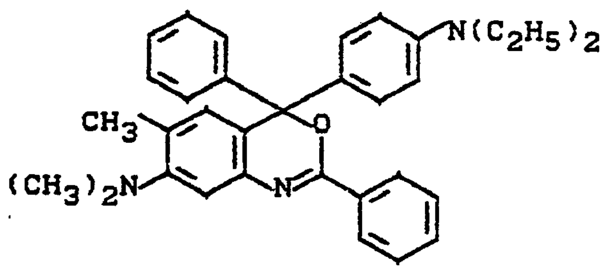

+

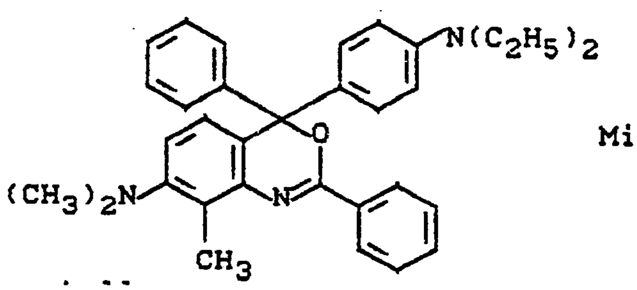

Mischungsverhältnis
90:10

herstellen.
Schmp.: 134-138° C
$\lambda max$ (Eisessig): 445, 628 nm
Farbe auf Säureton: stumpf grün
Farbe auf Phenolharz: stumpf grün
Farbe auf Salicylat: stumpf grün

Beispiel 33

Analog Beispiel 30 oder 31 oder in der Verfahrensweise analog Beispiel 8 läßt sich in 86 % Ausbeute eine Mischung der Verbindungen der Formeln

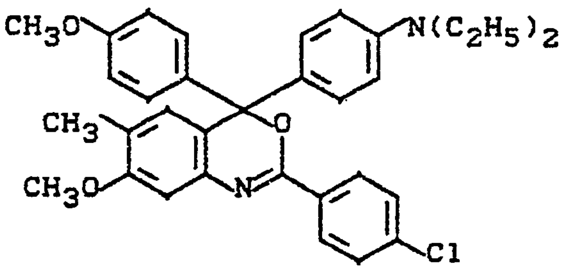

+

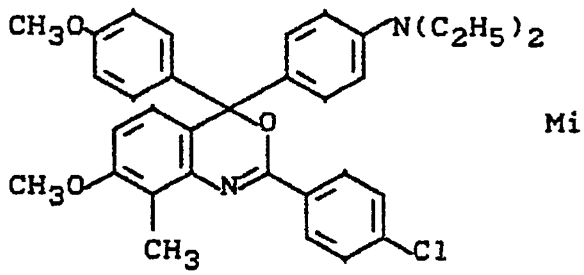

Mischungsverhältnis 85:15

herstellen.
λmax (Eisessig): 547 nm
Farbe auf Säureton: bordeaux
Farbe auf Bisphenol A: bordeaux

Analog oder durch Mischen der Einzelkomponenten lassen sich die folgenden Mischungen herstellen.

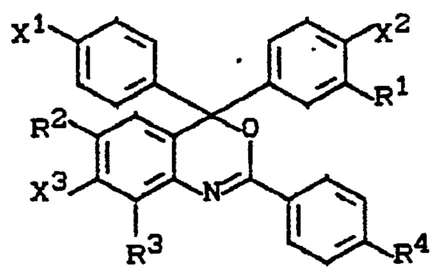

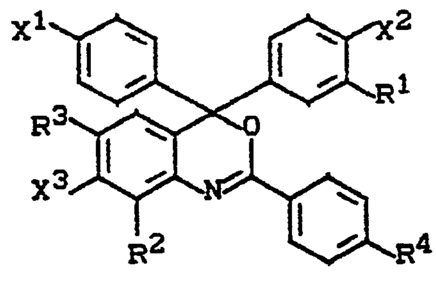

| Beispiel | $X^1$ | $X^2$ | $R^1$ | $X^3$ | $R^2$ | $R^3$ | $R^4$ | Farbton auf Säureton |
|---|---|---|---|---|---|---|---|---|
| 34 | H | $N(CH_3)_2$ | $CH_3$ | $N(CH_3)_2$ | $CH_3$ | H | H | stumpf grün |
| 35 | Cl | $N(C_2H_5)_2$ | $CH_3$ | $OCH_3$ | $CH_3$ | H | Cl | bordeaux |
| 36 | H | $N(CH_3)_2$ | H | $N(CH_3)_2$ | $CH_3$ | Cl | H | stumpf grün |
| 37 | $OCH_3$ | $N(C_2H_5)_2$ | H | $N(CH_3)_2$ | $OCH_3$ | H | H | schwarz |
| 38 | Cl | 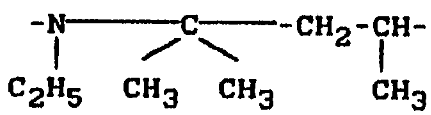 | | $N(CH_3)_2$ | $CH_3$ | H | H | stumpf grün |
| 39 | H | $N(C_2H_5)_2$ | H | 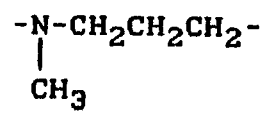 | H | $CH_3$ | | grün |
| 40 | $OC_2H_5$ | $N(CH_3)_2$ | H | $OCH_3$ | $OCH_3$ | $CH_3$ | H | bordeaux |

Herstellung eines druckempfindlichen kohlefreien Durchschreibpapiers

Beispiel 41

Eine Lösung von 3 g der 3,1-Benzoxazin-Verbindung des Beispiels 1 in 80 g Diisopropylnaphthalin und 17 g Kerosin wird auf an sich bekannte Weise mit Gelatine und Gummiarabicum durch Koazervation mikroverkapselt, mit Stärkelösung vermischt und auf ein Blatt Papier gestrichen. Ein zweites Blatt Papier wird auf der Frontseite mit säureaktiviertem Bentonit als Farbentwickler beschichtet. Das erste Blatt und das mit Farbentwickler beschichtete Blatt werden mit den Beschichtungen benachbart aufeinandergelegt. Durch Schreiben mit der Hand oder mit der Schreibmaschine auf dem ersten Blatt wird Druck ausgeübt, und es entwickelt sich auf dem mit dem Entwickler beschichteten Blatt eine intensive grüne Kopie, die ausgezeichnet lichtecht ist.

Wird das mit Mikrokapseln beschichtete Papier mit Tageslicht belichtet und anschließend auf das zweite Blatt geschrieben, so erhält man eine ebenso intensive grüne Kopie wie oben beschrieben.

Beispiel 42

4,45 g der 3,1-Benzoxazin-Mischung des Beispiels 31 und 0,55 g des 3,1-Benzoxazins der Formel

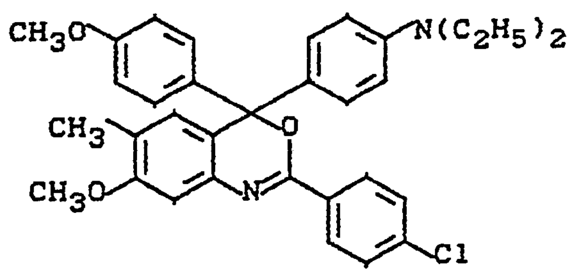

werden in einem Gemisch aus 40 g Dodecylbenzol (Marlican® der Fa. Hüls) und 60 g Chlorparaffin mit 45% Cl-Gehalt gelöst. 223 g einer solchen Lösung werden mit 39,5 g Oxadiazintrion von Desmodur H®(NCO-Gehalt 20,5%) vermischt. Anschließend erfolgt die Vermischung mit 320 g 0,5 %iger Polyvinylalkohollösung und die Emulgierung im Schergefälle eines Rotor/Stator-Emulgiergeräts. Die Vernetzung erfolgt mit 76 g 9,0 %iger Diethylentriaminlösung. Die Nachbehandlung erfolgt durch Erwärmen der Dispersion auf 60°C und dreistündiges Rühren bei 60°C. Es wird dabei eine 40% Kapseln enthaltende Dispersion der Kapselgröße 7,3 µm erhalten.

250 ml dieser Dispersion wird vorgelegt und unter intensivem Rühren 40 g Cellulosefeinschliff (Arbocell BE 600/30® der Firma Rettenmeier und Söhne) langsam eingestreut. Nach mindestens 30 minütigem intensivem Rühren erfolgt die Zugabe von 40 ml 50 %iger SBR-Latex (Baystal D 1600® der Fa. BAYER AG). Die resultierende 48,5 %ige Streichfarbe wird mit Wasser auf 30% Feststoffgehalt verdünnt und mit einer Luftbürste auf die Rückseite eines handelsüblichen Basis-Papiers gestrichen. Der Auftrag beträgt nach dem Trocknen 5 g/m².

Das so bestrichene Papier wird mit der beschichteten Seite auf die mit Entwicklersubstanz beschichtete Seite eines handelsüblichen kohlefreien Durchschreibepapiers gelegt. Bei Ausführung eines Schreibdruckes auf das mit Kapseln beschichtete Papier ergibt sich auf dem Durchschreibepapier eine intensive schwarze Durchschrift, die sehr lichtecht ist.

Wird das mit Mikrokapseln beschichtete Papier mit Tageslicht belichtet und anschließend auf das zweite Blatt geschrieben, so erhält man eine ebenso intensive schwarze Durchschrift wie oben beschrieben.

Als Entwicklersubstanzen auf dem handelsüblichen kohlefreien Durchschreibpapier eignen sich gleichermaßen gut z.B. säureaktivierter Bentonit (z.B. Copisil D4A10® der Fa. Südchemie München), p-tert.-Butylphenol-Formaldehyd-Kondensationsprodukte (z.B. UCAR-CKWA 9870® der Fa. Union Carbide Corporation) und p-Alkyl-Zink-Salicylate.

Beispiel 43

Verwendet man 3,57 g der 3,1-Benzoxazin-Mischung des Beispiels 30 und 1,43 g des 3,1-Benzoxazins der Formel

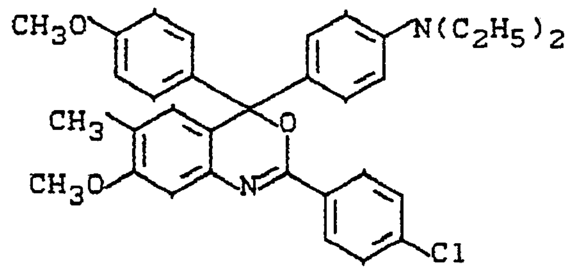

und arbeitet man analog Beispiel 42, so erhält man ein mit Mikrokapseln beschichtetes Papier, das in analoger Weise eine schwarze Durchschrift liefert, die sehr lichtecht ist. Auch nach Belichten des mit Mikrokapseln beschichteten Papiers am Tageslicht erhält man eine ebenso intensive schwarze Durchschrift.

Beispiel 44

5,0 g des 3,1-Benzoxazins des Beispiels 18 werden in 100 g Diisopropyldiphenyl gelöst. Ansonsten wird analog Beispiel 42 weiter gearbeitet. Man erhält so ein mit Mikrokapseln beschichtetes Papier, das beim Schreiben auf die beschichtete Seite eines handelsüblichen kohlefreien Druchschreibepapiers eine leuchtend grüne Druckschrift ergibt, die sehr lichtecht ist. Auch nach Belichten des mit Mikrokapseln beschichteten Papiers am Tageslicht erhält man eine ebenso intensive grüne Durchschrift.

Beispiel 45

171 Teile einer ca. 13 %igen Lösung einer Polyacrylsäure mit einem mittleren Molekulargewicht unter 300 000 werden mit Triethanolamin auf einem pH-Wert von 4,5 gebracht und mit Wasser auf eine Gesamtmenge von 1000 Teilen gebracht.

Zu dieser Lösung werden 160 Teile eines 90 %igen Melamin-Formaldehyd Harzes (Luwipal 68® der Fa. BASF, Ludwigshafen) gegeben.

Anschließend werden 1300 Teile einer Lösung von 5% Farbgeber des Beispiels 9 in Diisopropylnaphthalin (KMC 113® der Fa. Rütgers Kureha Solvent, Duisburg) gegeben und mit einer Mischsirene bei hoher Drehzahl eine Emulsion hergestellt.

Anschließend wird mit 700 Teilen Wasser verdünnt, unter Rühren auf 60°C erhitzt und 6 h bei 60° ausreagiert. Nach Abkühlen der Dispersion wird mit Triethanolamin neutralisiert.

Es wird eine 40 %ige Mikrokapseldispersion der mittleren Kapselgröße von 5 µm erhalten.

Diese Dispersion wird auf die Rückseite eines handelsüblichen Basis-Papiers gestrichen und getrocknet.

Dieses Papier ergibt analog Beispiel 42 beim Schreiben auf die beschichtete Seite eines handelsüblichen kohlefreien Durchschreibpapiers eine bordeaux-farbene Durchschrift, die sehr lichtecht ist. Auch nach Belichten des mit Mikrokapseln beschichteten Papiers am Tageslicht erhält man eine ebenso intensive bordeaux-farbene Durchschrift.

Verfährt man wie in Beispiel 41, 42, 44 oder 45 und setzt man eine Mischung von 3,1-Benzoxazinen, wie sie in den nachstehenden Tabellen aufgeführt sind, ein, so erhält man ein beschichtetes Blatt, das auf handelsüblichem kohlefreiem Durchschreibpapier eine schwarze Kopie liefert, die ausgezeichnet lichtecht ist.

| Beispiel | Verbindung des Beispiels | Menge | Verbindung des Beispiels | Menge |
|---|---|---|---|---|
| 46 | 31 | 4,4 g | 33 | 0,6 g |
| 47 | 8 | 3,8 g | 9 | 1,2 g |
| 48 | 1 | 2,5 g | 33 | 2,5 g |
| 49 | 32 | 1,8 g | 13 | 3,2 g |
| 50 | 37 | 4,0 g | 35 | 1,0 g |

| Beispiel | Verbindung des Beispiels | Menge | Verbindung der Formel | Menge |
|---|---|---|---|---|
| 51 | 32 | 3,5 g | 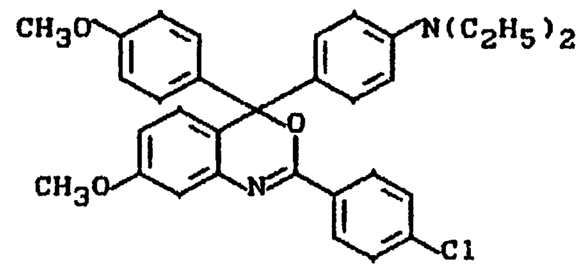 | 1,5 g |
| 52 | 18 | 2,2 g | 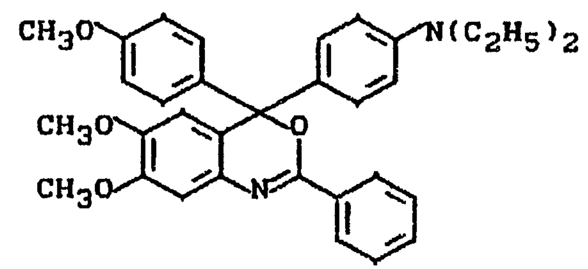 | 2,8 g |
| 53 | 31 | 4,5 g | 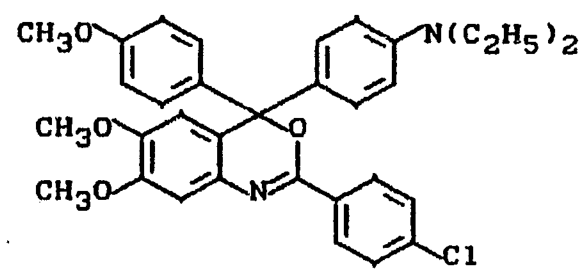 | 0,5 g |

| Beispiel | Verbindung des Beispiels | Menge | Verbindung der Formel | Menge |
|---|---|---|---|---|
| 54 | 33 | 1,5 g | 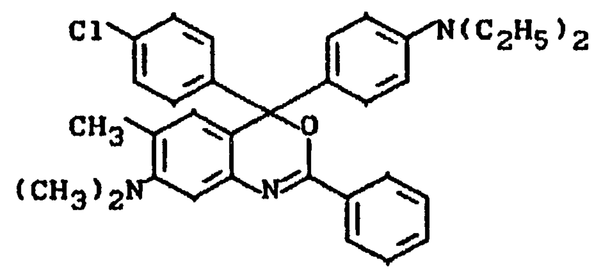 | 3,5 g |
| 55 | 33 | 1,6 g | 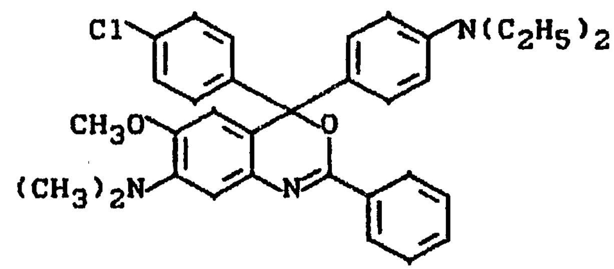 | 3,4 g |

Herstellung von wärmeempfindlichen Aufzeichnungsmaterialien

Beispiel 56

In einer Kugelmühle werden 32 g 4,4'-Isopropyliden-diphenol (Bisphenol A), 3,8 g Distearylamid des Ethylendiamins, 89 g Kaolin, 20 g eines zu 88 % hydrolysierten Polyvinylalkohols und 55 ml Wasser gemahlen, bis die Teilchengröße ca. 5 µm beträgt. In einer zweiten Kugelmühle werden 6 g der 3,1-Benzoxazin-Verbindung des Beispiels 8, 3 g eines zu 88 % hydrolysierten Polyvinylalkohols und 60 ml Wasser zu einer Teilchengröße von ca. 3 µm gemahlen. Die beiden Dispersionen werden zusammengegeben und mit einem Trockenauftragsgewicht von 5,5 g/m² auf Papier gestrichen. Durch Berühren des Papiers mit einem erhitzten Kugelschreiber wird eine intensive blaustichig schwarze Farbe erhalten, die eine gute Licht- und Sublimierechtheit hat.

Beispiel 57

Nach DE-OS 3 337 296 werden in einer Kugelmühle 40 g eines feinpulvrigen Polyacrylnitrilpolymerisats, hergestellt aus 94 % Acrylnitril, 0,5 % Methallylsulfonsäure und 5,5 % Acrylsäuremethylester, mit 225 g einer 8 %igen wäßrige Polyvinylalkohollösung und unter Zusatz von 1,3 g Distearylphosphorsäureester vermahlen. Eine zweite Dispersion wird aus 1 g der Benzoxazin-Mischung des Beispiels 30 und 55 g einer 8 %igen wäßrigen Polyvinylalkohollösung hergestellt. Man mischt die Dispersion des Farbbildners mit der des Akzeptors im Verhältnis 1/10 und trägt die Mischung auf Cellulosepapier mittels einer Rakel auf und trocknet sie, so daß man ein Auftragsgewicht von 6 bis 7 g/m² erhält. Das Papier ist mit Schreibmitteln, wie z.B. einem Kugelschreiber, beschriftbar. Es ist gegen starken Druck unempfindlich. Bei Berührung des Papiers mit einem beheizten Stift erhält man eine klare, scharfe, schattenfreie, grüne Schrift. Die Lichtechtheit der Färbung ist ausgezeichnet.

## Patentansprüche

1. Chromogene 3,1-Benzoxazine der Formel

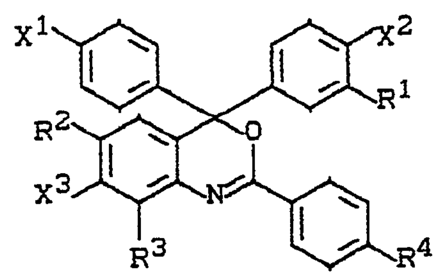

worin
$X^1$ Wasserstoff, $C_1$-$C_4$-Alkyl, Chlor oder $OY^1$,
$X^2$ $NY^2Y^3$,
$X^3$ $OY^4$ oder $NY^5Y^6$,
$R^1$ - $R^3$ unabhängig voneinander Wasserstoff, $C_1$-$C_4$-Alkyl, Chlor, $C_1$-$C_4$-Alkoxy, $C_1$-$C_4$-Mono- oder -Dialkylamino,
oder
$R^1$ zusammen mit $Y^2$,
$R^2$ oder $R^3$ zusammen mit $Y^4$ oder $Y^5$ oder
$R^2$ und $R^3$ gleichzeitig mit $Y^5$ und $Y^6$ eine 2- bis 4-gliedrige Brücke, die ein Sauerstoffatom oder ein Stickstoffatom enthalten und bis zu 4 Methylgruppen tragen kann,
bedeuten, wobei
$R^1$ und $R^3$ nur dann gleichzeitig für Wasserstoff stehen, wenn $R^2$ mit $Y^4$ oder $Y^5$ eine der obengenannten Brücken bildet,
$R^4$ Wasserstoff, Methyl oder Chlor,
$Y^1$ und $Y^4$ unabhängig voneinander $C_1$-$C_4$-Alkyl, Cyclohexyl oder Benzyl und
$Y^2$, $Y^3$, $Y^5$ und $Y^6$ unabhängig voneinander Wasserstoff, $C_1$-$C_4$-Alkyl, Cyclohexyl oder Benzyl
bedeuten.

2. Chromogene 3,1-Benzoxazine gemäß Anspruch 1 der Formel

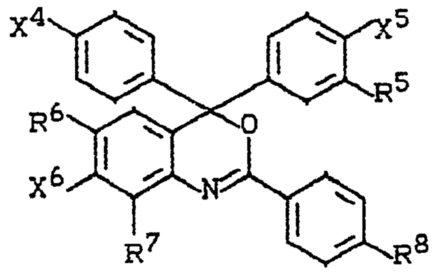

worin
$X^4$ Wasserstoff, Methyl, Ethyl, Chlor, Methoxy oder Ethoxy,
$X^5$ Dimethylamino, Diethylamino oder zusammen mit $R^5$ eine Gruppierung der Formeln

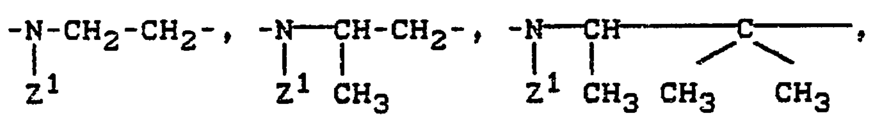

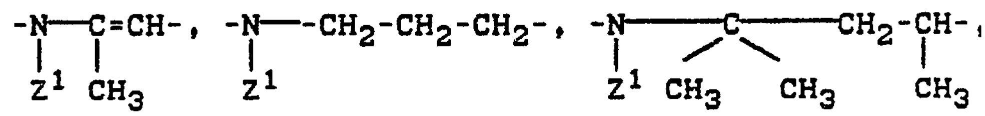

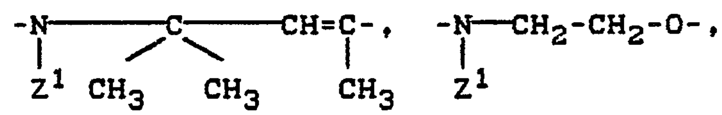

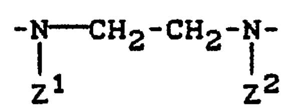

oder

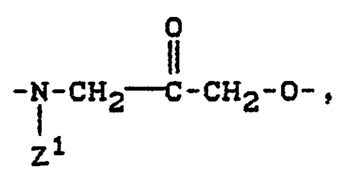

$X^6$ Methoxy, Ethoxy, Dimethylamino, Diethylamino oder zusammen mit $R^7$ eine Gruppierung der Formeln -O-$CH_2$-$CH_2$-, -O-$CH_2$-O- oder -O-$CH_2$-$CH_2$O- oder eine der bei $X^5$/$R^5$ angegebenen Gruppierungen,
$R^5$ und $R^6$ unabhängig voneinander Wasserstoff, Methyl, Ethyl, Chlor, Methoxy, Ethoxy, Methylamino, Ethylamino oder Dimethylamino,
$R^7$ Methyl, Ethyl, Chlor, Methoxy, Ethoxy, Methylamino, Ethylamino oder Dimethylamino,
$R^8$ Wasserstoff, Methyl oder Chlor und
$Z^1$ und $Z^2$ unabhängig voneinander Wasserstoff, Methyl oder Ethyl
beduten,

3. Chromogene 3,1-Benzoxazine gemäß Anspruch 1 der Formel

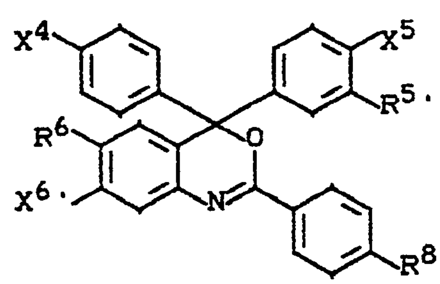

worin
$X^4$, $X^5$, $R^6$ und $R^8$ die in Anspruch 2 angegebene Bedeutung haben,
$X^{6'}$ Methoxy, Ethoxy, Dimethylamino oder Diethylamino und
$R^{5'}$ Methyl, Ethyl, Chlor, Methoxy, Ethoxy, Methylamino, Ethylamino oder Dimethylamino
bedeuten.

4. Chromogene 3,1-Benzoxazine gemäß Anspruch 1 der Formel

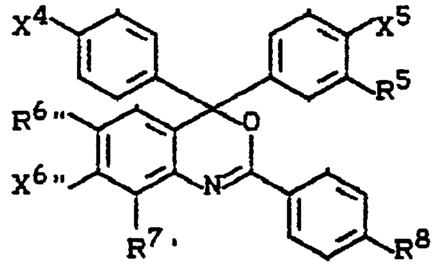

worin $X^4$, $X^5$, $R^5$ und $R^8$ die in Anspruch 2 angegebene Bedeutung haben,
$X^{6''}$ mit $R^{6''}$ eine Gruppierung der Formeln $-O-CH_2-CH_2-$, $-O-CH_2-O-$ oder $-O-CH_2-CH_2-O-$ oder eine der bei $X^5/R^5$ angegebenen Gruppierungen oder
$X^{6''}$ mit $R^{6''}$ und $R^{7'}$ eine Gruppierung der Formeln

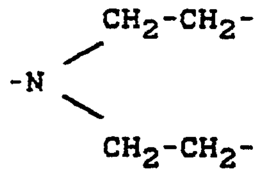

,

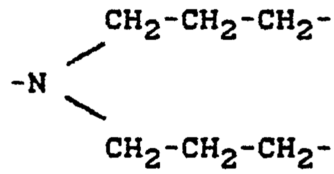

oder

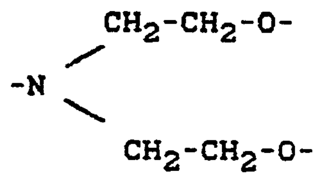

oder
$R^{7'}$ Wasserstoff, Methyl, Ethyl, Chlor, Methoxy, Ethoxy, Methylamino, Ethylamino oder Dimethylamino bedeuten.

5. Mischungen chromogener 3,1-Benzoxazine der Formeln

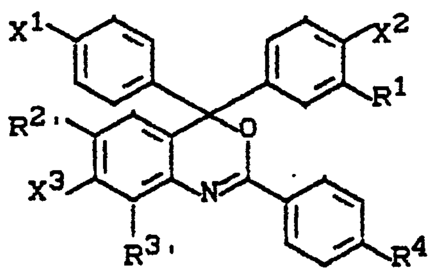

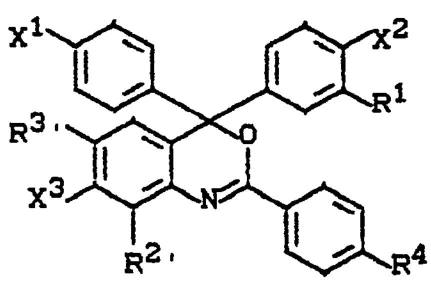

worin

$X^1$ Wasserstoff, $C_1$-$C_4$-Alkyl, Chlor oder $OY^1$,
$X^2$ $NY^2Y^3$,
$X^3$ $OY^4$ oder $NY^5Y^6$,
$R^1$ und $R^3$, unabhängig voneinander Wasserstoff, $C_1$-$C_4$-Alkyl, Chlor, $C_1$-$C_4$-Alkoxy, $C_1$-$C_4$-Mono- oder -Dialkylamino,
$R^{2'}$ $C_1$-$C_4$-Alkyl, Chlor, $C_1$-$C_4$-Alkoxy, $C_1$-$C_4$-Mono- oder -Dialkylamino,
oder
$R^1$ zusammen mit $Y^2$,
$R^2$, bzw. $R^{3'}$ zusammen mit $Y^4$ oder $Y^5$ eine 2- bis 4-gliedrige Brücke, die ein Sauerstoff- oder Stickstoffatom enthalten und bis zu 4 Methylgruppen tragen kann,
$Y^1$ und $Y^4$ unabhängig voneinander $C_1$-$C_4$-Alkyl, Cyclohexyl oder Benzyl und
$Y^2$, $Y^3$, $Y^5$ und $Y^6$ unabhängig voneinander Wasserstoff, $C_1$-$C_4$-Alkyl, Cyclohexyl oder Benzyl
bedeuten, und $R^{2'}$ und $R^{3'}$ verschieden voneinander sind.

6. Mischungen chromogener 3,1-Benzoxazine der Ansprüche 1-5 mit 3,1-Benzoxazinen der Formel

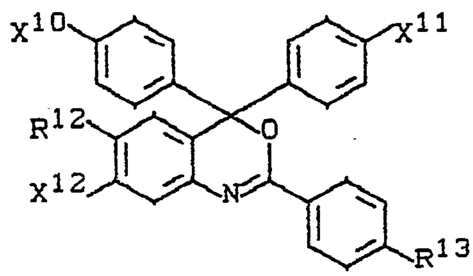

worin
$X^{10}$ Wasserstoff, $C_1$-$C_4$-Alkyl, Chlor oder $OY^7$,
$X^{11}$ $NY^8Y^9$,
$X^{12}$ $OY^{10}$ oder $NY^{11}Y^{12}$,
$R^{12}$ Wasserstoff, $C_1$-$C_4$-Alkyl, Chlor, $C_1$-$C_4$-Alkoxy, $C_1$-$C_4$-Mono- oder -Dialkylamino,
$R^{13}$ Wasserstoff, Methyl oder Chlor,
$Y^7$ und $Y^{10}$ unabhängig voneinander $C_1$-$C_4$-Alkyl, Cyclohexyl oder Benzyl und
$Y^8$, $Y^9$, $Y^{11}$ und $Y^{12}$ unabhängig voneinander Wasserstoff, $C_1$-$C_4$-Alkyl, Cyclohexyl oder Benzyl
bedeuten.

7. Leukoverbindungen der Formel

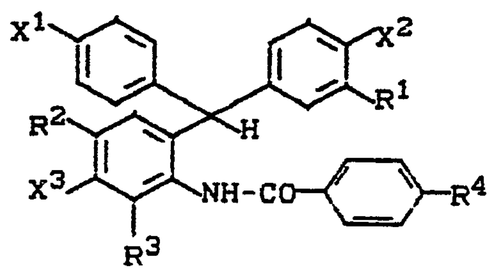

worin
die Substituenten die in Anspruch 1 angegebene Bedeutung haben.

8. Verfahren zur Herstellung der 3,1-Benzoxazine des Anspruchs 1, dadurch gekennzeichnet, daß man Amide der Formel

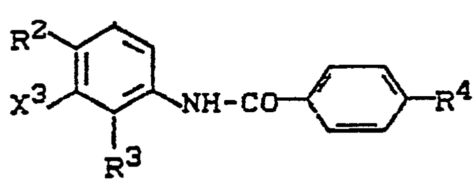

mit Ketonen der Formel

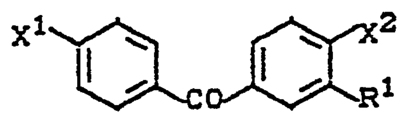

oder Verbindungen der Formel

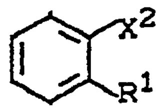

mit Ketonen der Formel

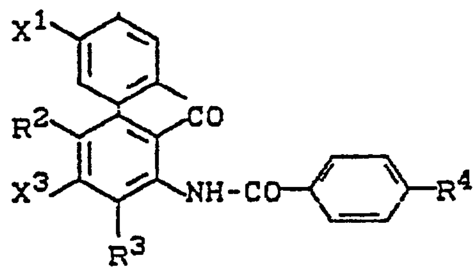

in Gegenwart von wasserabspaltenden Reagenzien umsetzt, oder daß man Leukoverbindungen der Formel

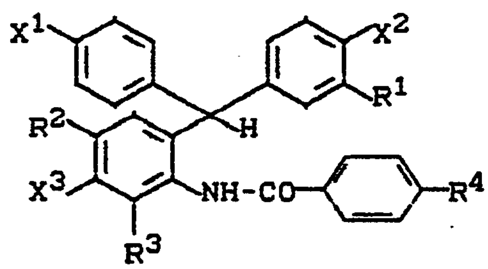

oxydiert,
wobei $X^1$-$X^3$ und $R^1$-$R^4$ die in Anspruch 1 angegebene Bedeutung haben.

9. Verwendung der chromogenen Farbbildner der Ansprüche 1–6 für druckkopierfähige, thermoreaktive oder elektrochrome Aufzeichnungsmaterialien.

10. Druck-, wärme- oder elektrosensitives Aufzeichnungsmaterial, dadurch gekennzeichnet, daß es in seinem Reaktantensystem ein 3,1-Benzoxazin der in den Ansprüchen 1–6 angegebenen Formeln als Farbbildner und einen sauren Farbentwickler enthält.

## Revendications

1. 3,1-benzoxazines chromogènes de formule

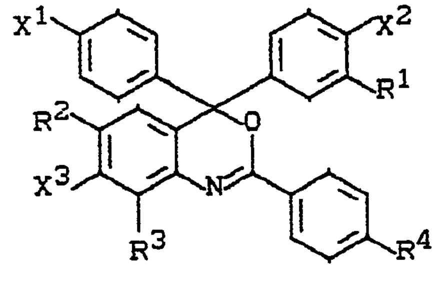

dans laquelle

$X^1$ représente l'hydrogène, un groupe alkyle en $C_1$-$C_4$, le chlore ou $OY^1$,
$X^2$ représente $NY^2Y^3$,
$X^3$ représente $OY^4$ ou $NY^5Y^6$,
$R^1$ à $R^3$ représentent chacun, indépendamment les uns des autres, l'hydrogène, un groupe alkyle en $C_1$-$C_4$, le chlore, un groupe alcoxy en $C_1$-$C_4$, mono- ou di-(alkyle en $C_1$-$C_4$)-amino,
ou bien
$R^1$ avec $Y^2$,
$R^2$ ou $R^3$ avec $Y^4$ ou $Y^5$, ou bien
$R^2$ et $R^3$, simultanément, avec $Y^5$ et $Y^6$,
forment des ponts de 2 à 4 chaînons qui peuvent contenir un atome d'oxygène ou un atome d'azote et porter jusqu'à 4 groupes méthyle,
sous réserve que
$R^1$ et $R^3$ ne peuvent représenter tous deux l'hydrogène que lorsque $R^2$ forme avec $Y^4$ ou $Y^5$ l'un des ponts mentionnés ci-dessus, $R^4$ représente l'hydrogène, un groupe méthyle ou le chlore,
$Y^1$ et $Y^4$ représentent chacun, indépendamment l'un de l'autre, un groupe alkyle en $C_1$-$C_4$, cyclohexyle ou benzyle, et
$Y^2$, $Y^3$, $Y^5$ et $Y^6$ représentent chacun, indépendamment les uns des autres, l'hydrogène, un groupe alkyle en $C_1$-$C_4$, cyclohexyle ou benzyle.
2. 3,1-benzoxazines chromogènes selon la revendication 1, de formule

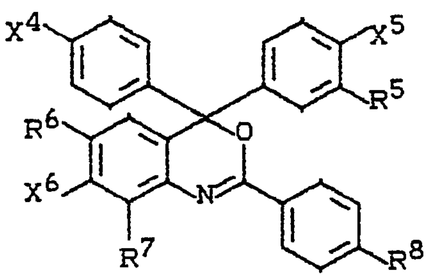

dans laquelle
$X^4$ représente l'hydrogène, un groupe méthyle, éthyle, le chlore, un groupe méthoxy ou éthoxy,
$X^5$ représente un groupe diméthylamino, diéthylamino ou forme avec R un groupement de formule

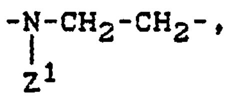 , 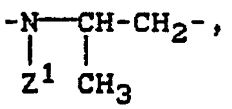 , 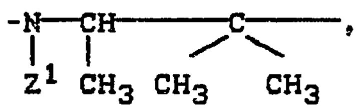 ,

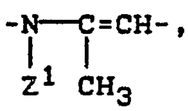 , 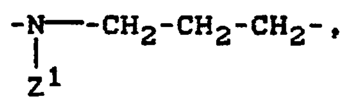 , 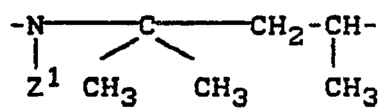 ,

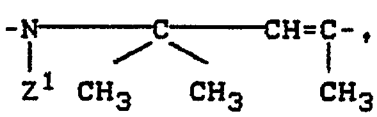 , 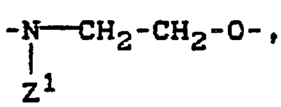 ,

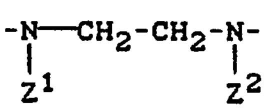 oder 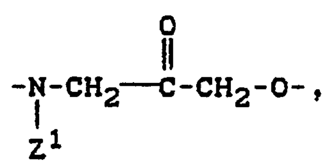 ,

$X^6$ représente un groupe méthoxy, éthoxy, diméthylamino, diéthylamino ou forme avec $R^7$ un groupement de formule $-O-CH_2-CH_2-$, $-O-CH_2-O-$ ou $-O-CH_2-CH_2O-$ ou l'un des groupements indiqués en référence à $X^5/R^5$,
$R^5$ et $R^6$ représentent chacun, indépendamment l'un de l'autre, l'hydrogène, un groupe méthyle, éthyle, le chlore, un groupe méthoxy, éthoxy, méthylamino, éthylamino ou diméthylamino,
$R^7$ représente un groupe méthyle, éthyle, le chlore, un groupe méthoxy, éthoxy, méthylamino, éthylamino ou diméthylamino,
$R^8$ représente l'hydrogène, un groupe méthyle ou le chlore, et $Z^1$ et $Z^2$ représentent chacun, indépendamment l'un de l'autre, l'hydrogène, un groupe méthyle ou éthyle.

3. 3,1-benzoxazines chromogènes selon la revendication 1, de formule

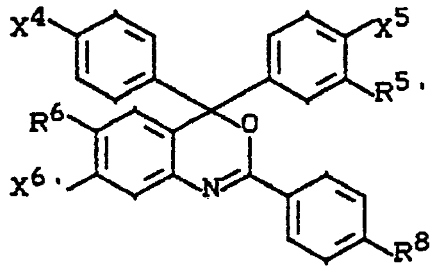

dans laquelle
$X^4$, $X^5$, $R^6$ et $R^8$ ont les significations indiquées dans la revendication 2,
$X^{6'}$ représente un groupe méthoxy, éthoxy, diméthylamino ou diéthylamino, et
$R^{5'}$ représente un groupe méthyle, éthyle, le chlore, un groupe méthoxy, éthoxy, méthylamino, éthylamino ou diméthylamino.

4. 3,1-benzoxazines chromogènes selon la revendication 1, de formule

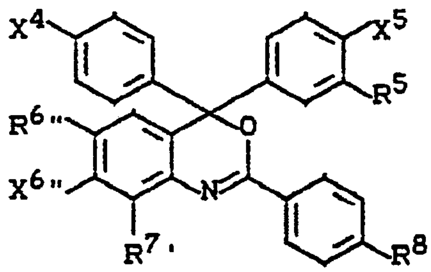

dans laquelle $X^4$, $X^5$, $R^5$ et $R^8$ ont les significations indiquées dans la revendication 2,
$X^{6''}$ forme avec $R^{6''}$ un groupement de formule $-O-CH_2-CH_2-$, $-O-CH_2-O-$ ou $-O-CH_2-CH_2-O-$ ou l'un des groupements indiqués en référence à $X^5/R^5$, ou bien
$X6''$ forme avec $R^{6''}$ et $R^{7'}$ un groupement de formule

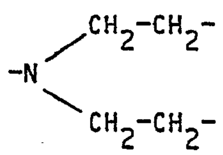

,

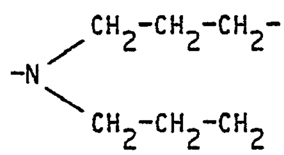

ou

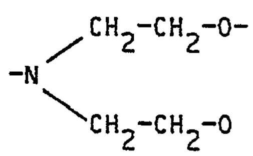

ou bien
$R^{7'}$ représente l'hydrogène, un groupe méthyle, éthyle, le chlore, un groupe méthoxy, éthoxy, méthylamino, éthylamino ou diméthylamino.

5. Mélanges de 3,1-benzoxazines chromogènes de formules

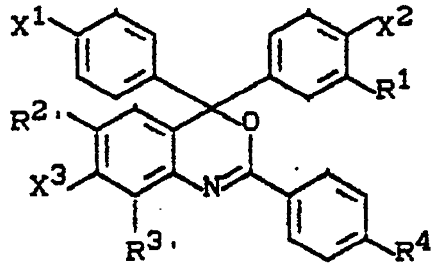

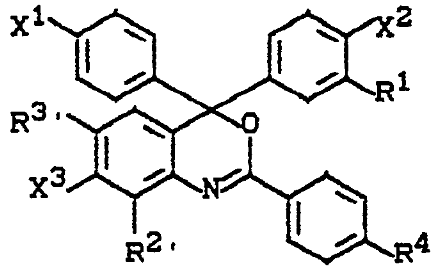

dans lesquelles

$X^1$ représente l'hydrogène, un groupe alkyle en $C_1$-$C_4$, le chlore ou un groupe $OY^1$,

$X^2$ représente $NY^2Y^3$,

$X^3$ représente $OY^4$ ou $NY^5Y^6$,

$R^1$ et $R^{3'}$ représentent chacun, indépendamment l'un de l'autre, l'hydrogène, un groupe alkyle en $C_1$-$C_4$, le chlore, un groupe alcoxy en $C_1$-$C_4$, mono- ou di-(alkyle en $C_1$-$C_4$)-amino,

$R^{2'}$ représente un groupe alkyle en $C_1$-$C_4$, le chlore, un groupe alcoxy en $C_1$-$C_4$, mono- ou di-(alkyle en $C_1$-$C_4$)-amino,

ou bien

$R^1$ avec $Y^2$,

$R^{2'}$ ou $R^{3'}$ avec $Y^4$ ou $Y^5$, forment un pont de 2 à 4 chaînons qui peut contenir un atome d'oxygène ou d'azote et porter jusqu'a 4 groupes méthyle,

$Y^1$ et $Y^4$ représentent chacun, indépendamment l'un de l'autre, un groupe alkyle en $C_1$-$C_4$, cyclohexyle ou benzyle, et

$Y^2$, $Y^3$, $Y^5$ et $Y^6$ représentent chacun, indépendamment les uns des autres, l'hydrogène, un groupe alkyle en $C_1$-$C_4$, cyclohexyle ou benzyle,

et $R^{2'}$ et $R^{3'}$ ont des significations différentes.

6. Mélanges de 3,1-benzoxazines chromogènes des revendications 1 à 5 avec des 3,1-benzoxazines de formule

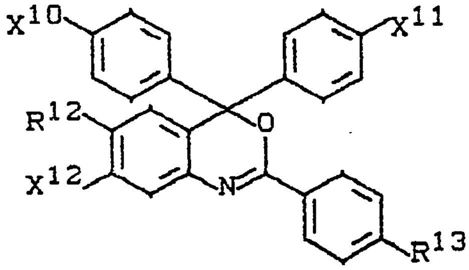

dans laquelle

$X^{10}$ représente l'hydrogène, un groupe alkyle en $C_1$-$C_4$, le chlore ou $OY^7$,

$X^{11}$ représente $NY^8Y^9$,

$X^{12}$ représente $OY^{10}$ ou $NY^{11}Y^{12}$,

$R^{12}$ représente l'hydrogène, un groupe alkyle en $C_1$-$C_4$, le chlore, un groupe alcoxy en $C_1$-$C_4$, mono- ou di-(alkyle en $C_1$-$C_4$)-amino, R représente l'hydrogène, un groupe méthyle ou le chlore, $Y^7$ et $Y^{10}$ représentent chacun, indépendamment l'un de l'autre, un groupe alkyle en $C_1$-$C_4$, cyclohexyle ou benzyle, et $Y^8$, $Y^9$, $Y^{11}$ et $Y^{12}$ représentent chacun, indépendamment les uns des autres, l'hydrogène, un groupe alkyle en $C_1$-$C_4$, cyclohexyle ou benzyle.

7. Leucos de formule

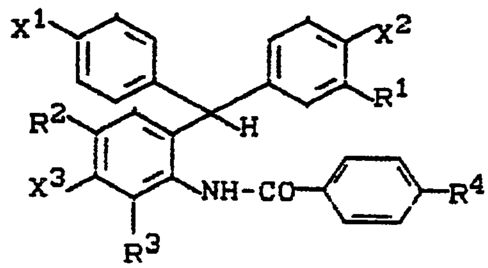

dans laquelle les symboles ont les significations indiquées dans la revendication 1.

8. Procédé de préparation des 3,1-benzoxazines de la revendication 1, caractérisé en ce que l'on fait réagir des amides de formule

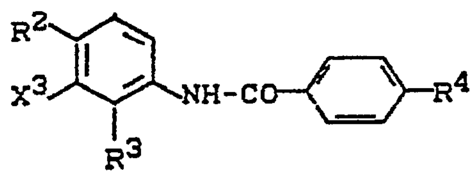

avec des cétones de formule

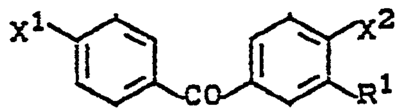

ou des composés de formule

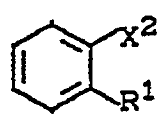

avec des cétones de formule

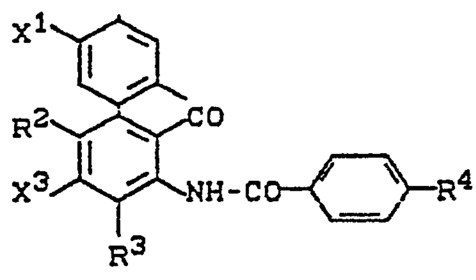

en présence de réactifs déshydratants, ou bien en ce que l'on oxyde des leucos de formule

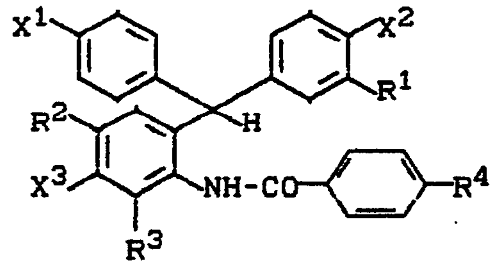

les symboles $X^1$ à $X^3$ et $R^1$ à $R^4$ ayant les significations indiquées dans la revendication 1.

9. Utilisation des chromogènes des revendications 1 à 6 pour des matériaux d'enregistrement aptes à la copie par pression, thermoréactifs ou électrochromes.

10. Matériau d'enregistrement sensible à la pression, à la chaleur ou à l'électricité, caractérisé en ce qu'il contient dans son système de réactifs une 3,1-benzoxazine répondant à l'une des formules indiquées dans les revendications 1 à 6 en tant que chromogène, et un revélateur de couleur acide.

**Claims**

1. Chromogenic 3,1-benzoxazines of the formula

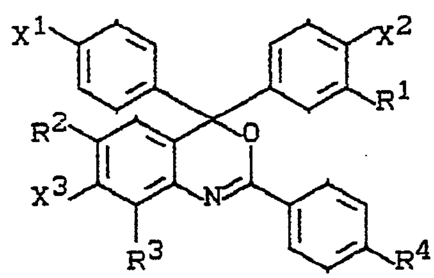

wherein

$X^1$ denotes hydrogen, $C_1$-$C_4$-alkyl, chlorine or $OY^1$,

$X^2$ denotes $NY^2Y^3$,

$X^3$ denotes $OY^4$ or $NY^5Y^6$,

$R^1$ - $R^3$ independently of one another denote hydrogen, $C_1$-$C_4$-alkyl, chlorine, $C_1$-$C_4$-alkoxy or $C_1$-$C_4$-mono- or -dialkylamino, or

$R^1$ together with $Y^2$,

$R^2$ or $R^3$ together with $Y^4$ or $Y^5$, or

$R^2$ and $R^3$ simultaneously with $Y^5$ and $Y^6$ denote a 2- to 4-membered bridge which can contain one oxygen atom or one nitrogen atom and can carry up to 4 methyl groups,

and wherein

$R^1$ and $R^3$ simultaneously represent hydrogen only if $R^2$ with $Y^4$ or $Y^5$ forms one of the abovementioned bridges,

$R^4$ denotes hydrogen, methyl or chlorine,

$Y^1$ and $Y^4$ independently of one another denote $C_1$-$C_4$-alkyl, cyclohexyl or benzyl and

$Y^2$, $Y^3$, $Y^5$ and $Y^6$ independently of one another denote hydrogen, $C^1$-$C^4$-alkyl, cyclohexyl or benzyl.

2. Chromogenic 3,1-benzoxazines according to Claim 1, of the formula

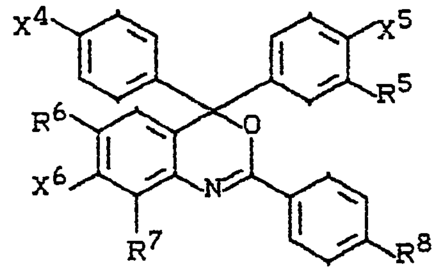

wherein

$X^4$ denotes hydrogen, methyl, ethyl, chlorine, methoxy or ethoxy,
$X^5$ denotes dimethylamino or diethylamino, or together with $R^5$ denotes a grouping of the formulae

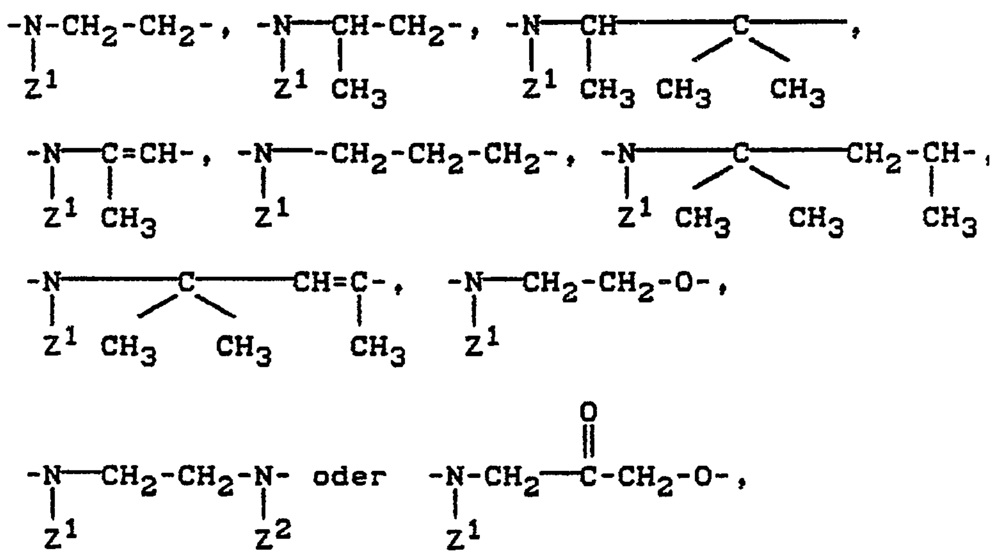
oder

$X^6$ denotes methoxy, ethoxy, dimethylamino or diethylamino, or together with $R^7$ denotes a grouping of the formulae $-O-CH_2-CH_2-$, $-O-CH_2-O-$ or $-O-CH_2-CH_2O-$ or one of the groupings mentioned for $X^5/R^5$,
$R^5$ and $R^6$ independently of one another denote hydrogen, methyl, ethyl, chlorine, methoxy, ethoxy, methylamino, ethylamino or dimethylamino, $R^7$ denotes methyl, ethyl, chlorine, methoxy, ethoxy, methylamino, ethylamino or dimethylamino, $R^8$ denotes hydrogen, methyl or chlorine and $Z^1$ and $Z^2$ independently of one another denote hydrogen, methyl or ethyl.

3. Chromogenic 3,1-benzoxazines according to Claim 1, of the formula

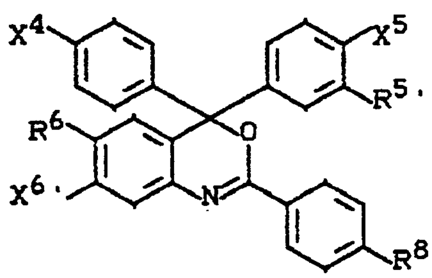

wherein
$X^4$, $X^5$, $R^6$ and $R^8$ have the meaning given in Claim 2,
$X^{6'}$ denotes methoxy, ethoxy, dimethylamino or diethylamino and
$R^{5'}$ denotes methyl, ethyl, chlorine, methoxy, ethoxy, methylamino, ethylamino or dimethylamino.

4. Chromogenic 3,1-benzoxazines according to Claim 1, of the formula

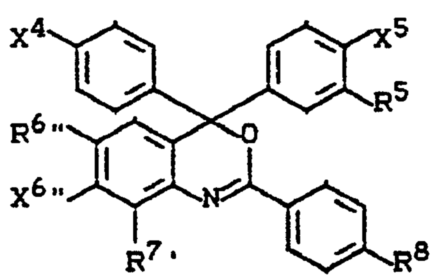

wherein

$X^4$, $X^5$, $R^5$ and $R^8$ have the meaning given in Claim 2,

$X^{6''}$ with $R^{6''}$ denotes a grouping of the formulae $-O-CH_2-CH_2-$, $-O-CH_2-O-$ or $-O-CH_2-CH_2-O-$ or one of the groupings mentioned in the case of

$X^5/R^5$, or

$X^{6''}$ with $R^{6''}$ and $R^{7'}$ denotes a grouping of the formulae

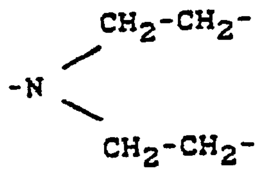

,

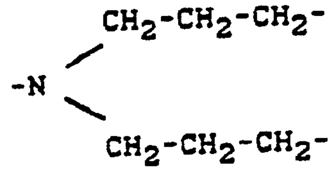

or

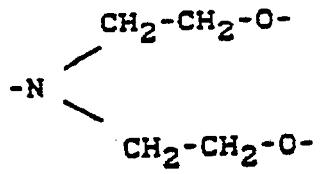

or $R^{7'}$ denotes hydrogen, methyl, ethyl, chlorine, methoxy, ethoxy, methylamino, ethylamino or dimethylamino.

5. Mixtures of chromogenic 3, 1-benzoxazines of the formulae

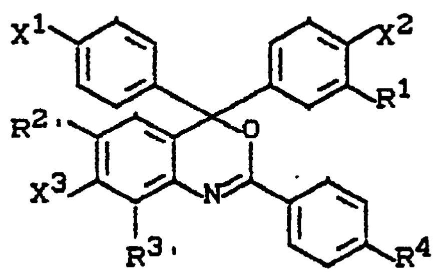

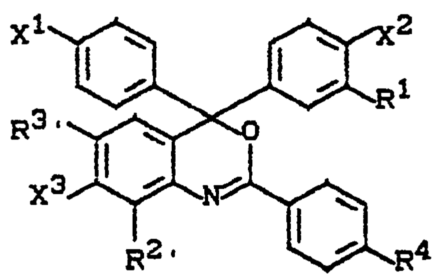

wherein

$X^1$ denotes hydrogen, $C_1$-$C_4$-alkyl, chlorine or $OY^1$,

$X^2$ denotes $NY^2Y^3$,

$X^3$ denotes $OY^4$ or $NY^5Y^6$,

$R^1$ and $R^{3'}$ independently of one another denote hydrogen, $C_1$-$C_4$-alkyl, chlorine, $C_1$-$C_4$-alkoxy or $C_1$-$C_4$-mono- or -dialkylamino,

$R^{2'}$ denotes $C_1$-$C_4$-alkyl, chlorine, $C_1$-$C_4$-alkoxy or $C_1$-$C_4$-mono- or -dialkylamino, or

$R^1$ together with $Y^2$, or

$R^{2'}$ or $R^{3'}$, together with $Y^4$ or $Y^5$, denote a 2- to 4-membered bridge which can contain an oxygen or nitrogen atom and can carry up to 4 methyl groups,

$Y^1$ and $Y^4$ independently of one another denote $C_1$-$C_4$-alkyl, cyclohexyl or benzyl and $Y^2$, $Y^3$, $Y^5$ and $Y^6$ independently of one another denote hydrogen, $C_1$-$C_4$-alkyl, cyclohexyl or benzyl, and $R^2$ and $R^{3'}$ are

different from one another.

6. Mixtures of chromogenic 3,1-benzoxazines of Claims 1–5 with 3,1-benzoxazines of the formula

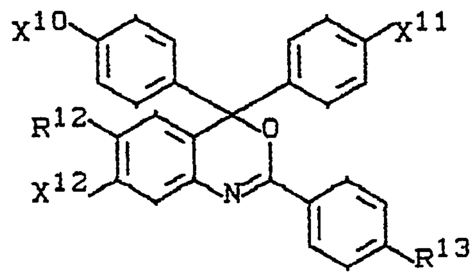

wherein

$X^{10}$ denotes hydrogen, $C_1$-$C_4$-alkyl, chlorine or $OY^7$,
$X^{11}$ denotes $NY^8Y^9$,
$X^{12}$ denotes $OY^{10}$ or $NY^{11}Y^{12}$,
$R^{12}$ denotes hydrogen, $C^1$-$C^4$-alkyl, chlorine, $C_1$-$C_4$-alkoxy or $C_1$-$C_4$-mono- or -dialkylamino,
$R^{13}$ denotes hydrogen, methyl or chlorine,
$Y^7$ and $Y^{10}$ independently of one another denote $C_1$-$C_4$-alkyl, cyclohexyl or benzyl and
$Y^8$, $Y^9$, $Y^{11}$ and $Y^{12}$ independently of one another denote hydrogen, $C_1$-$C_4$-alkyl, cyclohexyl or benzyl.

7. Leuco compounds of the formula

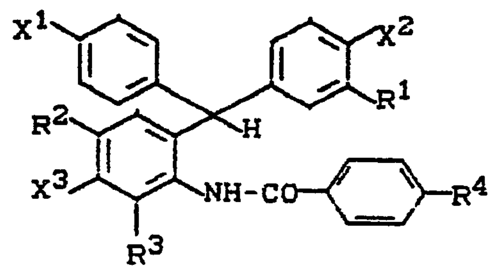

wherein

the substituents have the meaning given in Claim 1.

8. Process for the preparation of the 3,1-benzoxazines of Claim 1, characterized in that amides of the formula

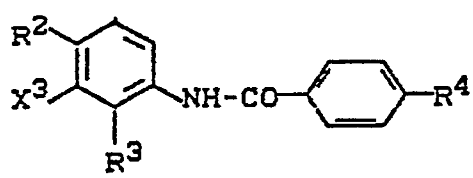

are reacted with ketones of the formula

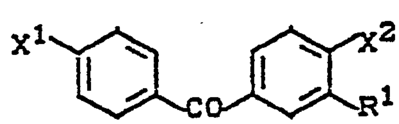

or compounds of the formula

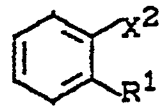

are reacted with ketones of the formula

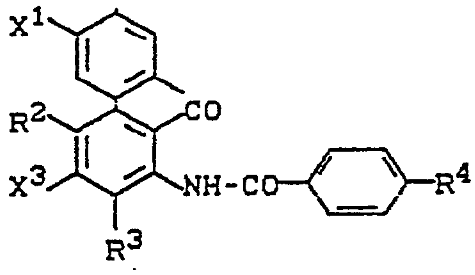

in the presence of dehydrating reagents or in that leuco compounds of the formula

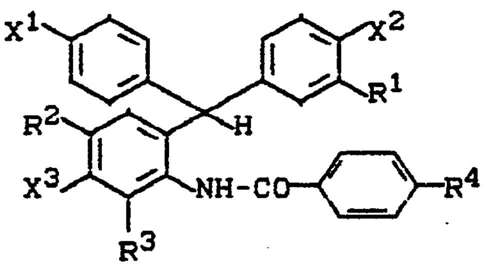

are oxidized,
wherein
$X^1$-$X^3$ and $R^1$-$R^4$ have the meaning given in Claim 1.

9. Use of the chromogenic colour-forming agents of Claims 1–6 for pressure-copying, thermoreactive or electrochromic recording materials.

10. Pressure-, heat- or electrosensitive recording material, characterized in that it contains a 3,1-benzoxazine of the formulae given in Claims 1–6 as a colour-forming agent and an acid colour developer in its reactant system.